(19) Europäisches Patentamt
European Patent Office
Office européen des brevets

(11) EP 4 636 005 A1

(12) EUROPEAN PATENT APPLICATION
published in accordance with Art. 153(4) EPC

(43) Date of publication:
**22.10.2025 Bulletin 2025/43**

(21) Application number: **23902701.4**

(22) Date of filing: **12.12.2023**

(51) International Patent Classification (IPC):
***C08G 59/02*** $^{(2006.01)}$ ***B01D 15/20*** $^{(2006.01)}$

(52) Cooperative Patent Classification (CPC):
**B01D 15/20; B01D 15/22; B01D 15/26; B01J 20/281; B01J 20/30; C08G 59/02**

(86) International application number:
**PCT/CN2023/138138**

(87) International publication number:
**WO 2024/125505 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.12.2022 CN 202211600949**

(71) Applicant: **Yu Ji (Shanghai) Biological Technology Co., Ltd.**
**Shanghai 201401 (CN)**

(72) Inventors:
- **ZHANG, Chao**
  **Shanghai 201401 (CN)**
- **XIE, Lei**
  **Shanghai 201401 (CN)**
- **WANG, Shujiang**
  **Shanghai 201401 (CN)**
- **ZHU, Wenjin**
  **Shanghai 201401 (CN)**

(74) Representative: **Dompatent Partnerschaft von Patent- und Rechtsanwälten mbB**
**Deichmannhaus am Dom**
**Bahnhofsvorplatz 1**
**50667 Köln (DE)**

(54) **RAW MATERIAL COMPOSITION FOR CHROMATOGRAPHY MATERIAL, CHROMATOGRAPHY MATERIAL, PREPARATION METHOD THEREFOR AND USE THEREOF, MONOLITHIC COLUMN, AND CHROMATOPILE**

(57) A raw material composition for a chromatography material, a chromatography material, a preparation method therefor and the use thereof, a monolithic column, and a chromatopile. The raw material composition for a chromatography material, based on 100% of the total weight of a raw material A and a pore-forming agent B, comprises the following components: 20-70% of the raw material A; 30-80% the pore-forming agent B; and 0.1-1‰ of a catalyst C, wherein the raw material A comprises a substance containing multiple epoxy groups. The chromatography material prepared from the chromatography material composition can solve the current issue of the use of a chromatography microsphere filler in biological macromolecules. The chromatography material has the characteristics of uniform internal structure, good preparation reproducibility, high toughness, ability to modify a functional ligand and high hydrophilicity, and is more suitable for separation and purification of biomolecules.

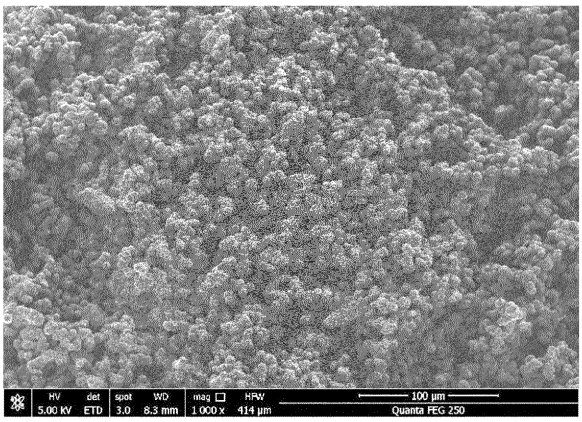

FIG. 2

EP 4 636 005 A1

## Description

The present application claims priority to Chinese Patent Application No. 2022116009496 filed on December 12, 2022. The entire contents of the Chinese Patent Application are incorporated into the present application by reference.

FIELD of TECHNOLOGY

The present invention specifically relates to a raw material composition for a chromatographic material, a chromatographic material and a preparation method therefor and use thereof, a monolithic column, and a chromatopile.

BACKGROUND

Currently, separation and purification of biomolecules are basically carried out by using chromatographic microsphere media for surface ligand modification to achieve the separation and purification of different functions and to obtain purer molecules as pharmaceutical and diagnostic reagents, raw materials for biochemical processes, additives for food and cosmetics, etc. Chromatographic microspheres have prominent bottlenecks in the field of purification of biomacromolecules (e.g., plasmid DNA, mRNA, viral vectors, exosomes, antibody-drug conjugate (ADC), complex polymer proteins, etc.). Specific defects are as follows.

1. The chromatographic microspheres have smaller pore channel distribution, so that a part of the macromolecules are unable to effectively enter middle and deeper parts of pore channels, a ligand utilization rate is low, and a processing capacity is low.
2. The chromatographic microspheres with a porous structure have a significant diffusion effect, a retention time needs to be increased to achieve full diffusion to pore surfaces of the porous microspheres to reach a theoretical specific surface value, and a process cycle is long.
3. An internal pore channel structure of the chromatographic microsphere structure is prone to generating a vortex effect, thereby generating a greater shear force. Moreover, the porous structure of the chromatographic microspheres contains a dead pore structure, thereby generating the phenomena of easy local binding and difficult elution, leading to a lower yield of the effective active biomacromolecules (e.g., lentiviruses, herpes viruses, exosomes, and larger nucleic acid molecules), with the yield even as low as 10-20%.
4. The chromatographic microspheres need to be filled to prevent breakage during use, thereby avoiding the risk of invisibly increasing the biomedicine processing cost and the inter-batch stability due to contamination and other factors.
5. The chromatographic microspheres themselves have a higher production cost, the inter-batch stability of the microspheres during production has always been a pain point for domestic chromatographic fillers, and controlling the inter-batch stability of the microspheres during production indirectly increases the processing cost of the microspheres and ultimately increases the downstream production cost of a biopharmaceutical company.

Separation materials of monolithic columns, as fourth-generation chromatographic columns, have been widely concerned in recent years. However, due to easy formation of uneven internal structures during preparation, existing polymer monolithic columns still have the disadvantages of uneven distribution of surface functional groups, poor adsorption performance, an uneven structure, poor repeatability, etc, so that the columns have lower separation efficiency and are used limitedly in analysis and separation.

Therefore, it is urgently necessary to develop novel monolithic column materials to overcome the above defects.

SUMMARY

The technical problems to be solved by the present invention are to overcome the shortcomings of a low processing capacity, a long process cycle, a low yield of effective active biomacromolecules, poor inter-batcher stability and a higher production cost of existing chromatographic microspheres in the field of purification of biomacromolecules, and to overcome the disadvantages of an uneven internal structure and poor repeatability of existing monolithic columns. Thus, a raw material composition for a chromatographic material, a chromatographic material and a preparation method therefor and use thereof, a monolithic column, and a chromatopile are provided.

The present invention provides the following technical solutions to solve the above technical problems.

The present invention provides a raw material composition for a chromatographic material, based on a total weight of a raw material A and a pore-forming agent B as 100%, including the following components:

20%-70% of the raw material A;

30%-80% of the pore-forming agent B; and
0.1‰-1‰ of a catalyst C;
wherein the raw material A includes a substance containing a polyepoxy group.

In the present invention, the substance containing a polyepoxy group refers to a substance containing more than two epoxy groups in structure.

In the present invention, the substance containing a polyepoxy group is preferably a polyepoxy glycidyl ether substance or a polyepoxy glycidyl ester substance.

In the present invention, the glycidyl ether substance may be one or more of monomers that satisfy the following structural formula I:

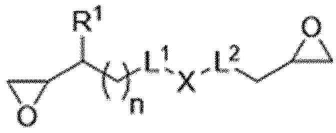

I

wherein in the structural formula I, $R^1$ is selected from a hydrogen atom, substituted or unsubstituted $C_1$-$C_{10}$ alkyl, or an epoxy group;
n is a positive integer ranging from 0-10;
$L^1$ is selected from an oxygen atom or a nitrogen atom;
$L^2$ is selected from an oxygen atom or a nitrogen atom; and
X is selected from substituted or unsubstituted $C_1$-$C_{10}$ alkylene, substituted or unsubstituted $C_3$-$C_{10}$ cycloalkylene,

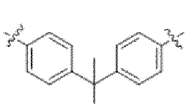 , 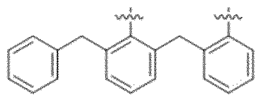 , 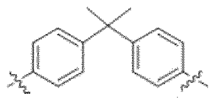 , 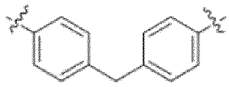 ,

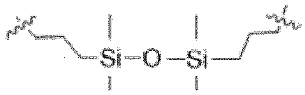 ,

or a benzene ring.

Preferably, the glycidyl ether substance is one or more of the following monomers (a)-(m):

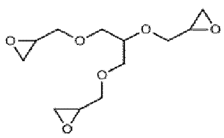

(a)

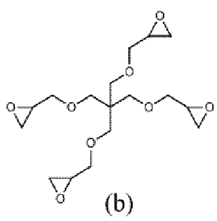

(b)

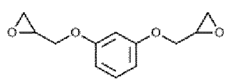

(c)

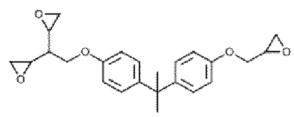

(d)

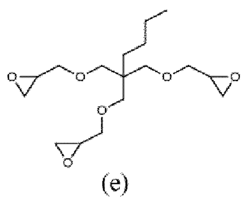

(e)

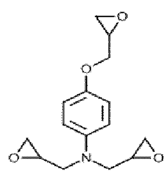

(f)

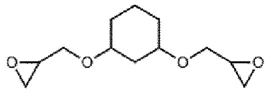

(g)

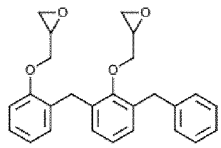

(h)

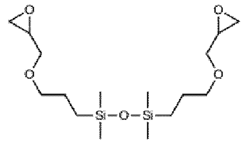

(i)

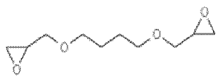

(j)

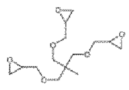

(k)

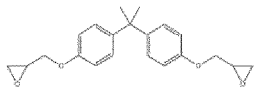

(l)

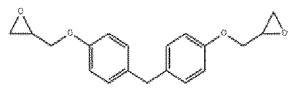

(m)

The above structure (a) is the structure of glycerol triglycidyl ether.

The above structure (b) is the structure of pentaerythritol tetraglycidyl ether.

The above structure (j) is the structure of 1,4-butanediol diglycidyl ether.

The above structure (k) is the structure of trihydroxymethylethane triglycidyl ether.

The above structure (l) is the structure of bisphenol A diglycidyl ether.

The above structure (m) is the structure of bisphenol F diglycidyl ether.

In the present invention, the glycidyl ether substance may be one or more of polymers that satisfy the following structural formula II:

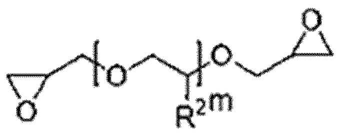

II

wherein in the structural formula II, $R^2$ is selected from a hydrogen atom, substituted or unsubstituted $C_1$-$C_{10}$ alkyl, or

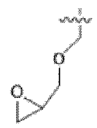

; and

m is a positive integer ranging from 2-40.

Preferably, the glycidyl ether substance is one or more of the following polymers (1)-(4):

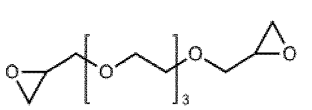

(1)

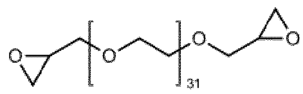

(2)

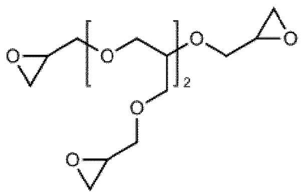

(3)

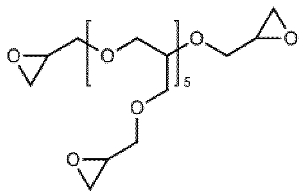

(4)

In the present invention, the glycidyl ester substance may be one or more of monomers that satisfy the following structural formula III:

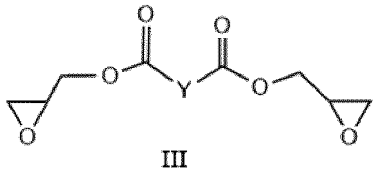

III

,

wherein in the structural formula III, Y is selected from substituted or unsubstituted $C_1$-$C_{10}$ alkylene, substituted or unsubstituted $C_3$-$C_{10}$ cycloalkylene, or a benzene ring.

Preferably, the glycidyl ester substance is the following monomers (A) and/or (B):

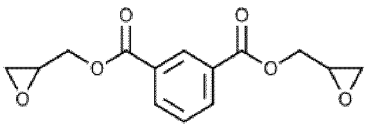

(A)

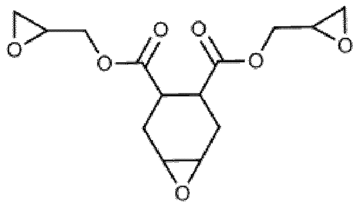

(B)

In the present invention, the substance containing a polyepoxy group is preferably one or more of the following monomers (I)-(IV):

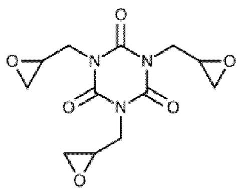

(I)

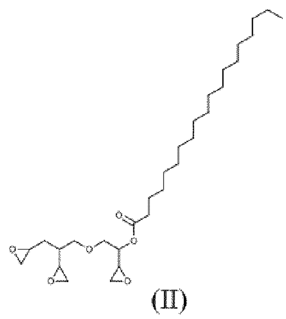

(II)

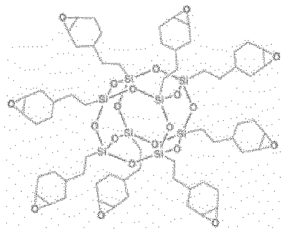

(III)

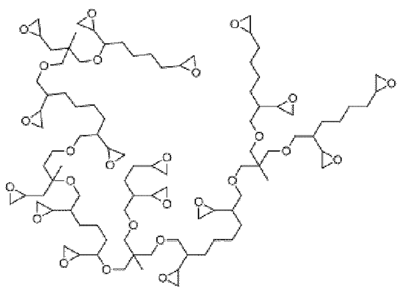

(IV)

In the present invention, the substance containing a polyepoxy group is preferably a polyepoxy glycidyl ether monomer and/or a polyepoxy glycidyl ether polymer.

The polyepoxy glycidyl ether monomer may be glycerol triglycidyl ether and/or pentaerythritol tetraglycidyl ether.

The polyepoxy glycidyl ether polymer may be polyglycerol glycidyl ether and/or polypentaerythritol tetraglycidyl ether.

In the present invention, when the substance containing a polyepoxy group is a mixture of the polyepoxy glycidyl ether monomer and the polyepoxy glycidyl ether polymer, a mixing volume ratio of the polyepoxy glycidyl ether monomer to the polyepoxy glycidyl ether polymer may be (0.1-9):1, for example, 1:1, 2:1, 3:1, 4:1, 5:1, 6:1, 7:1, or 8:1.

In the present invention, a molecular weight of the substance containing a polyepoxy group may be 300-2,000, and for example, the molecular weight is 550 or 700.

In the present invention, a weight percentage of the raw material A in the total weight of the raw material A and the

pore-forming agent B is preferably 22%-70%, for example, 25%, 30%, 35%, 40%, 45%, 50%, 55%, 58%, 65%, or 68%.

In the present invention, the raw material A may also include a substance containing a monoepoxy group. The substance containing a monoepoxy group refers to a substance containing one epoxy group in structure.

The substance containing a monoepoxy group is preferably a monoepoxy glycidyl ether substance or a monoepoxy glycidyl ester substance.

The monoepoxy glycidyl ether substance may be a conventional substance containing one epoxy group in structure in the art, preferably phenyl glycidyl ether and/or butyl glycidyl ether.

The monoepoxy glycidyl ester substance may be one or more of phenyl glycidyl ether, butyl glycidyl ether, pentyl glycidyl ether, octyl glycidyl ether, octadecyl glycidyl ether, and naphthyl glycidyl ether, preferably the phenyl glycidyl ether and/or the butyl glycidyl ether.

In the present invention, the pore-forming agent B is one or more of chemical solvents that are mutually soluble with the raw material A and the catalyst C, preferably one or more of toluene, xylene, dichloromethane, dichloroethane, dioxane, formamide (DMF), dimethyl sulfoxide (DMSO), and methyl tert-butyl ether, and more preferably one or more of the toluene, the dioxane, and the methyl tert-butyl ether, for example, the toluene and the dioxane, the toluene and the methyl tert-butyl ether, or the dioxane and the methyl tert-butyl ether.

In the present invention, when the pore-forming agent B is a mixture of two different substances, a volume ratio of the two different substances may be (0.1-9):1, for example, 0.5:1, 1:1, 2:1, 3:1, 5:1, or 7:1.

In the present invention, a weight percentage of the pore-forming agent B in the total weight of the raw material A and the pore-forming agent B is preferably 35%-80%, for example, 40%, 45%, 50%, 60%, 65%, 70%, 75%, or 78%.

In the present invention, the catalyst C may be Lewis acid and/or a complex of Lewis acid.

The Lewis acid may be one or more of aluminum trichloride, boron trifluoride, ferric bromide, ferric chloride, zinc chloride, niobium trichloride or niobium pentachloride, and sulfur trioxide, for example, the boron trifluoride.

The complex of Lewis acid may be one or more of boron trifluoride diethyl etherate, boron trifluoride acetonitrile, boron fluoride dimethyl carbonate, and boron trifluoride ethylamine.

In the present invention, a weight percentage of the catalyst C in the total weight of the raw material A and the pore-forming agent B is preferably 0.3‰-1‰, for example, 0.4‰, 0.5‰, 0.6‰, 0.7‰, 0.8‰, or 0.9‰.

In some preferred embodiments of the present invention, the raw material A is the polyepoxy glycidyl ether monomer and/or the polyepoxy glycidyl ether polymer; and the pore-forming agent B is one or more of the toluene, the xylene, the dichloromethane, the dichloroethane, the dioxane, the formamide (DMF), the dimethyl sulfoxide (DMSO), and the methyl tert-butyl ether.

In some preferred embodiments of the present invention, the raw material A is the polyepoxy glycidyl ether polymer and a monoepoxy glycidyl ether monomer; and the pore-forming agent B is one or more of the toluene, the xylene, the dichloromethane, the dichloroethane, the dioxane, the formamide (DMF), the dimethyl sulfoxide (DMSO), and the methyl tert-butyl ether.

In some preferred embodiments of the present invention, the raw material A is polyglycerol triglycidyl ether and the monoepoxy glycidyl ether monomer; the pore-forming agent B is one or more of the toluene, the xylene, the dichloromethane, the dichloroethane, the dioxane, the formamide (DMF), the dimethyl sulfoxide (DMSO), and the methyl tert-butyl ether; and the monoepoxy glycidyl ether monomer is preferably the phenyl glycidyl ether and/or the butyl glycidyl ether.

In some preferred embodiments of the present invention, the raw material A is the polyglycerol triglycidyl ether and the monoepoxy glycidyl ether monomer; the pore-forming agent B is one or more of the toluene, the dioxane, and methyl tert-butyl glyceryl ether; and the monoepoxy glycidyl ether monomer is preferably the phenyl glycidyl ether and/or the butyl glycidyl ether.

In some preferred embodiments of the present invention, based on the total weight of the raw material A and the pore-forming agent B as 100%, the raw material composition for a chromatographic material includes the following components:

50-70% of the raw material A, wherein the raw material A is the polyglycerol triglycidyl ether and the monoepoxy glycidyl ether monomer, and the monoepoxy glycidyl ether monomer is the phenyl glycidyl ether and/or the butyl glycidyl ether; and

30-50% of the pore-forming agent B, wherein the pore-forming agent B is "the dioxane and the methyl tert-butyl glyceryl ether" or "the toluene and the dioxane".

In some preferred embodiments of the present invention, based on the total weight of the raw material A and the pore-forming agent B as 100%, the raw material composition for a chromatographic material includes the following components:

50-70% of the raw material A, wherein the raw material A is the polyglycerol triglycidyl ether and the monoepoxy

glycidyl ether monomer, and the monoepoxy glycidyl ether monomer is the phenyl glycidyl ether and/or the butyl glycidyl ether;
30-50% of the pore-forming agent B, wherein the pore-forming agent B is "the dioxane and the methyl tert-butyl glyceryl ether" or "the toluene and the dioxane"; and
1‰ of the catalyst C.

In some preferred embodiments of the present invention, based on the total weight of the raw material A and the pore-forming agent B as 100%, the raw material composition for a chromatographic material includes the following components:

60% of the raw material A, wherein the raw material A is the polyglycerol triglycidyl ether with a molecular weight of 550 and the butyl glycidyl ether, and a volume ratio of the polyglycerol triglycidyl ether with the molecular weight of 550 to the butyl glycidyl ether is 2:1;
40% of the pore-forming agent B, wherein the pore-forming agent B is the dioxane and/or the methyl tert-butyl glyceryl ether, and a volume ratio of the dioxane to the methyl tert-butyl glyceryl ether is 1:1; and
1‰ of the catalyst C.

In one preferred embodiment of the present invention, based on the total weight of the raw material A and the pore-forming agent B as 100%, the raw material composition for a chromatographic material includes the following components:

60% of the raw material A, wherein the raw material A is the polyglycerol triglycidyl ether with a molecular weight of 550 and the butyl glycidyl ether, and a volume ratio of the polyglycerol triglycidyl ether with the molecular weight of 550 to the butyl glycidyl ether is 2:1;
40% of the pore-forming agent B, wherein the pore-forming agent B is the dioxane and the methyl tert-butyl glyceryl ether, and a volume ratio of the dioxane to the methyl tert-butyl glyceryl ether is 1:1; and
1‰ of the catalyst C, wherein the catalyst is the boron trifluoride diethyl etherate.

The present invention also provides a chromatographic material, which includes the aforementioned raw material composition.
Through pores are distributed on the chromatographic material, and an average pore size of the through pores is 0.2-10 μm;

a porosity of the through pores is 30-80%;
a pore volume of the through pores is 0.5-2.5 mL/g; and
an epoxy ligand density of the chromatographic material is 30-80 μmol/mL.

In the present invention, the average pore size of the through pores is preferably 0.4-8 μm, for example, 0.44 μm, 1.4 μm, 0.74 μm, 0.8 μm, 2 μm, 2.7 μm, 3.4 μm, 3.7 μm, 3.8 μm, 4.2 μm, 4.3 μm, 4.5 μm, 5.2 μm, 6 μm, 7 μm, or 7.5 μm.
In the present invention, the porosity of the through pores is preferably 40-68%, for example, 45.9%, 46.5%, 46.8%, 48.8%, 49.7%, 59.7%, 58.6%, 60.1%, 60.4%, 65.1%, 65.9%, or 66.3%.
In the present invention, the pore volume of the through pores is preferably 0.5-1.8 mL/g, for example, 0.53 mL/g, 0.58 mL/g, 0.59 mL/g, 0.62 mL/g, 0.86 mL/g, 1.2 mL/g, 1.33 mL/g, 1.39 mL/g, 1.42 mL/g, 1.5 mL/g, 1.6 mL/g, 1.7 mL/g, or 1.78 mL/g.
In the present invention, the epoxy ligand density of the chromatographic material is preferably 35-60 μmol/mL, for example, 39 μmol/mL, 42 μmol/mL, 43 μmol/mL, 48 μmol/mL, or 51 μmol/mL.
The present invention also provides a method for preparing a chromatographic material, which includes the steps of: allowing the aforementioned raw material composition for a chromatographic material to undergo a prepolymerization reaction and then carrying out forming, wherein

a temperature of the prepolymerization reaction is 0°C-10°C; and
a temperature of the forming is 25°C-60°C.

In the present invention, the temperature of the prepolymerization reaction is preferably 2°C-8°C.
In the present invention, a time of the prepolymerization reaction may be 15-60 min, preferably 20-40 min, for example, 30 min.
In the present invention, the temperature of the forming is preferably 30°C-40°C.
In the present invention, a time of the forming may be 2 h-12 h, preferably 4 h-8 h.

In the present invention, a standing state is maintained during the forming without being affected by an external force.

In the present invention, a mold may be a conventional mold in the art, and a material of the mold may be a conventional material in the art, for example, PE plastic. A shape of the mold may be a conventional shape in the art, for example, a cylindrical shape.

In the present invention, after the forming is completed, preferably, the method also includes carrying out post-treatment on the chromatographic material.

A method of the post-treatment may be conventional in the art, and for example, the post-treatment includes cleaning the chromatographic material with an alcohol-based organic reagent.

The alcohol-based organic reagent may be conventional in the art, for example, one or more of anhydrous methanol, ethanol, and isopropanol.

A method of the cleaning may be conventional in the art, for example, vacuum cleaning or rinsing by suction filtration.

In some preferred embodiments of the present invention, the method for preparing a chromatographic material includes the steps of: after allowing the raw material composition for a chromatographic material to undergo the prepolymerization reaction at 2°C-8°C, carrying out the forming at 30°C-40°C,
wherein in the raw material composition for a chromatographic material, the raw material A is the polyepoxy glycidyl ether polymer and the monoepoxy glycidyl ether monomer; and the pore-forming agent B is one or more of the toluene, the xylene, the dichloromethane, the dichloroethane, the dioxane, the formamide (DMF), the dimethyl sulfoxide (DMSO), and the methyl tert-butyl ether.

In some preferred embodiments of the present invention, the method for preparing a chromatographic material includes the steps of: after allowing the raw material composition for a chromatographic material to undergo the prepolymerization reaction at 2°C-8°C, carrying out the forming at 30°C-40°C,
wherein in the raw material composition for a chromatographic material, the raw material A is the polyglycerol triglycidyl ether and the monoepoxy glycidyl ether monomer; the pore-forming agent B is one or more of the toluene, the xylene, the dichloromethane, the dichloroethane, the dioxane, the formamide (DMF), the dimethyl sulfoxide (DMSO), and the methyl tert-butyl ether; and the monoepoxy glycidyl ether monomer is preferably the phenyl glycidyl ether and/or the butyl glycidyl ether.

In some preferred embodiments of the present invention, the method for preparing a chromatographic material includes the steps of: after allowing the raw material composition for a chromatographic material to undergo the prepolymerization reaction at 2°C-8°C, carrying out the forming at 30°C-40°C,
wherein in the raw material composition for a chromatographic material, the raw material A is the polyglycerol triglycidyl ether and the monoepoxy glycidyl ether monomer; the pore-forming agent B is one or more of the toluene, the dioxane, and the methyl tert-butyl glyceryl ether; and the monoepoxy glycidyl ether monomer is preferably the phenyl glycidyl ether and/or the butyl glycidyl ether.

In some preferred embodiments of the present invention, the method for preparing a chromatographic material includes the steps of: after allowing the raw material composition for a chromatographic material to undergo the prepolymerization reaction at 2°C-8°C, carrying out the forming at 30°C-40°C,
wherein based on the total weight of the raw material A and the pore-forming agent B as 100%, the raw material composition for a chromatographic material includes the following components: 50-70% of the raw material A, wherein the raw material A is the polyglycerol triglycidyl ether and the monoepoxy glycidyl ether monomer, and the monoepoxy glycidyl ether monomer is the phenyl glycidyl ether and/or the butyl glycidyl ether; and 30-50% of the pore-forming agent B, wherein the pore-forming agent B is "the dioxane and the methyl tert-butyl glyceryl ether" or "the toluene and the dioxane".

In some preferred embodiments of the present invention, the method for preparing a chromatographic material includes the steps of: after allowing the raw material composition for a chromatographic material to undergo the prepolymerization reaction at 2°C-8°C, carrying out the forming at 30°C-40°C,
wherein based on the total weight of the raw material A and the pore-forming agent B as 100%, the raw material composition for a chromatographic material includes the following components: 50-70% of the raw material A, wherein the raw material A is the polyglycerol triglycidyl ether and the monoepoxy glycidyl ether monomer, and the monoepoxy glycidyl ether monomer is the phenyl glycidyl ether and/or the butyl glycidyl ether; and 30-50% of the pore-forming agent B, wherein the pore-forming agent B is "the dioxane and the methyl tert-butyl glyceryl ether" or "the toluene and the dioxane".

In some preferred embodiments of the present invention, the method for preparing a chromatographic material includes the steps of: after allowing the raw material composition for a chromatographic material to undergo the prepolymerization reaction at 2°C-8°C, carrying out the forming at 30°C-40°C,
wherein based on the total weight of the raw material A and the pore-forming agent B as 100%, the raw material composition for a chromatographic material includes the following components: 50-70% of the raw material A, wherein the raw material A is the polyglycerol triglycidyl ether and the monoepoxy glycidyl ether monomer, and the monoepoxy glycidyl ether monomer is the phenyl glycidyl ether and/or the butyl glycidyl ether; 30-50% of the pore-forming agent B, wherein the

pore-forming agent B is "the dioxane and the methyl tert-butyl glyceryl ether" or "the toluene and the dioxane"; and 1‰ of the catalyst C.

In some preferred embodiments of the present invention, the method for preparing a chromatographic material includes the steps of: after allowing the raw material composition for a chromatographic material to undergo the prepolymerization reaction at 2°C-8°C, carrying out the forming at 30°C-40°C,
wherein based on the total weight of the raw material A and the pore-forming agent B as 100%, the raw material composition for a chromatographic material includes the following components: 60% of the raw material A, wherein the raw material A is the polyglycerol triglycidyl ether with a molecular weight of 550 and the butyl glycidyl ether, and a volume ratio of the polyglycerol triglycidyl ether with the molecular weight of 550 to the butyl glycidyl ether is 2:1; 40% of the pore-forming agent B, wherein the pore-forming agent B is the dioxane and/or the methyl tert-butyl glyceryl ether, and a volume ratio of the dioxane to the methyl tert-butyl glyceryl ether is 1:1; and 1‰ of the catalyst C.

In one preferred embodiment of the present invention, the method for preparing a chromatographic material includes the steps of: after allowing the raw material composition for a chromatographic material to undergo the prepolymerization reaction at 4°C, carrying out the forming at 35°C,
wherein based on the total weight of the raw material A and the pore-forming agent B as 100%, the raw material composition for a chromatographic material includes the following components: 60% of the raw material A, wherein the raw material A is the polyglycerol triglycidyl ether with a molecular weight of 550 and the butyl glycidyl ether, and a volume ratio of the polyglycerol triglycidyl ether with the molecular weight of 550 to the butyl glycidyl ether is 2:1; 40% of the pore-forming agent B, wherein the pore-forming agent B is the dioxane and the methyl tert-butyl glyceryl ether, and a volume ratio of the dioxane to the methyl tert-butyl glyceryl ether is 1:1; and 1‰ of the catalyst C, wherein the catalyst is the boron trifluoride diethyl etherate.

The present invention also provides a chromatographic material prepared by the aforementioned preparation method.

The present invention also provides a monolithic column, which includes the aforementioned chromatographic material.

The present invention also provides a monolithic column, through pores are distributed in the monolithic column, and an average pore size of the through pores is 0.2-10 μm;

a porosity of the through pores is 30-80%;
a pore volume of the through pores is 0.5-2.5 mL/g; and
an epoxy ligand density of the monolithic column is 30-80 μmol/mL.

In the monolithic column of the present invention, the average pore size of the through pores is preferably 0.4-8 μm, for example, 0.44 μm, 1.4 μm, 0.74 μm, 0.8 μm, 2 μm, 2.7 μm, 3.4 μm, 3.7 μm, 3.8 μm, 4.2 μm, 4.3 μm, 4.5 μm, 5.2 μm, 6 μm, 7 μm, or 7.5 μm.

In the monolithic column of the present invention, the porosity of the through pores is preferably 40-68%, for example, 45.9%, 46.5%, 46.8%, 48.8%, 49.7%, 59.7%, 58.6%, 60.1%, 60.4%, 65.1%, 65.9%, or 66.3%.

In the monolithic column of the present invention, the pore volume of the through pores is preferably 0.5-1.8 mL/g, for example, 0.53 mL/g, 0.58 mL/g, 0.59 mL/g, 0.62 mL/g, 0.86 mL/g, 1.2 mL/g, 1.33 mL/g, 1.39 mL/g, 1.42 mL/g, 1.5 mL/g, 1.6 mL/g, 1.7 mL/g, or 1.78 mL/g.

In the present invention, the epoxy ligand density of the monolithic column is preferably 35-60 μmol/mL, for example, 39 μmol/mL, 42 μmol/mL, 43 μmol/mL, 48 μmol/mL, or 51 μmol/mL.

The present invention also provides a chromatopile, which includes the aforementioned raw material composition, the aforementioned chromatographic material, or the aforementioned monolithic column.

The chromatopile in the present invention refers to a chromatographic separation material for a chromatographic material containing a polyepoxy group or a polyhydroxy group.

The present invention also provides use of the aforementioned raw material composition for a chromatographic material, the aforementioned chromatographic material, the aforementioned monolithic column, or the aforementioned chromatopile in the field of purification of biomacromolecules.

In the present invention, the biomacromolecules are generally proteins, plasmid DNA, mRNA, viral vectors, exosomes, ADC, or composite polymer proteins.

On the basis of conforming to common sense in the art, the above preferred conditions can be combined arbitrarily to obtain various preferred examples of the present invention.

All reagents and raw materials used in the present invention are commercially available.

Positive progressive effects of the present invention are as follows.

1. The raw material contained in the chromatographic material composition of the present invention can be used for preparing the chromatographic material with a controllable through pore channel (submicron-micron level) structure

under the combined action of the pore-forming agent and the catalyst, which can be grafted with different ligand groups through certain chemical coupling modification to achieve a chromatographic function. The chromatographic material with advantages can exactly solve a current issue of use of a chromatographic microsphere filler in biomacromolecules, which is specifically as follows.

(1) Pore channels of the chromatographic material prepared by the present invention are adjustable at the submicron-micron level and relatively even in distribution and are in single-peak normal distribution, and a ligand utilization rate is high.
(2) The pore channels of the chromatographic material prepared by the present invention are the through pores without a diffusion effect, a retention time is not required to be increased, a process cycle is shortened, no obvious vortex phenomenon is found, a shear force is low, and an effective active yield of the biomacromolecules is higher.
(3) The chromatographic material prepared by the present invention has no impact on a load of a sample at a high flow rate.
(4) The chromatographic material of the present invention has a relatively simple preparation process, the inter-batch stability is easy to achieve, and the chromatographic material is directly used (plug and play type) without the need to carry out column loading verification work.
(5) The chromatographic material prepared by the present invention can be either used repeatedly through inter-batch verification or used as a disposable technical supporting consumable material, which has higher economic selectivity and a lower production cost.

2. The chromatographic material of the present invention is even in internal structure and good in preparation reproducibility, has the characteristics of high toughness, ability to modify a functional ligand and higher hydrophilicity, and is more suitable for separation and purification of biomolecules.

BRIEF DESCRIPTION OF THE DRAWINGS

FIG. 1 shows diagrams of a forming tooling of a chromatographic material, wherein A in FIG. 1 shows the cross section diagram of the forming tooling of the chromatographic material; and B in FIG. 1 shows the longitudinal section diagram of the forming tooling of the chromatographic material.
FIG. 2 shows a scanning electron microscope image of a chromatographic material prepared in Example 1.
FIG. 3 shows a scanning electron microscope image of a chromatographic material prepared in Example 3.
FIG. 4 shows a scanning electron microscope image of a chromatographic material prepared in Example 6.
FIG. 5 shows a pore size distribution diagram of a chromatographic material prepared in Example 2.
FIG. 6 shows a pore size distribution diagram of a chromatographic material prepared in Example 7.
FIG. 7 shows a diagram of bovine serum albumin loading capacities of the chromatographic material prepared in Example 6 at different flow rates.

DETAILED DESCRIPTION OF THE PREFERRED EMBODIMENT

The present invention is further illustrated below through the way of examples, but the present invention is not limited in the scope of the described examples accordingly. Experimental methods without specific conditions in the following examples are selected in accordance with conventional methods and conditions or in accordance with commodity instructions.
Unless otherwise specified, all reagents used in the following examples and comparative examples are commercially available products in the art.

**Example 1**

1. A raw material A (polyglycerol glycidyl ether, Mr=550) with a weight proportion of 30%, 70% of a pore-forming agent B (a mixture of toluene and dioxane at a volume ratio of 1:1) and 1‰ of a catalyst C (boron trifluoride) were accurately weighed, respectively, then fully mixed evenly and stirred at a low temperature of 4°C for 30 min to obtain a prepolymer.

2. The evenly stirred prepolymer was poured into a PE mold with a plastic material (a self-made mold in a concentric circular cylinder shape, with a structural diagram as shown in FIG. 1) for standing for 4 h at a temperature controlled at

35°C, wherein a stable static state was maintained during a forming process.

3. After a reaction was completed, an alcohol-based organic reagent, such as anhydrous methanol, was added to carry out vacuum cleaning or rinsing by suction filtration on residual liquid in pore channels.

4. After the cleaning was completed, a resulting material was soaked in a 20% ethanol solution and stored at a low temperature (4°C) for later use.

In Examples 2-7, except for conditions listed in Table 1 below, all other conditions are the same as those in Example 1.

Table 1

| Number | Prepolymerizat ion reaction temperature (°C) | Curing and forming temperatu re (°C) | Formula of raw material A (volume ratio) | Raw materi al A% | Formula of pore-forming agent B (volume ratio) | Poreformin g agent B% | Formula of catalyst C | Cataly st C‰ |
|---|---|---|---|---|---|---|---|---|
| Example 1 | 4 | 35 | Polyglycerol glycidyl ether (Mr550) | 30% | Toluene/dioxane =1:1 | 70% | Boron tri-fluorid e diethyl ethe-rate | 1‰ |
| Example 2 | 4 | 35 | Polypentaerythritol tetraglycidyl ether (Mr700) | 25% | Toluene/dioxane =1:1 | 75% | Boron tri-fluorid e diethyl ethe-rate | 1‰ |
| Example 3 | 4 | 35 | Polyglycerol triglycidyl ether (Mr300):glycerol triglycidyl ether=1:1 | 40% | Toluene/methyl tert-butyl glyceryl ether=1:1 | 60% | Boron tri-fluorid e diethyl ethe-rate | 1‰ |
| Example 4 | 4 | 35 | Polyglycerol triglycidyl ether (Mr2000):pentaeryth ritol tetraglycidyl ether= 1:1 | 22% | Toluene/methyl tert-butyl glyceryl ether=1:1 | 78% | Boron trifluorid e acetonitri le | 1‰ |
| Example 5 | 4 | 35 | Polypentaerythritol tetraglycidyl ether (Mr1300):glycerol triglycidyl ether=1:1 | 25% | Toluene/dioxane =1:1 | 75% | Boron trifluorid e acetonitri le | 0.65‰ |
| Example 6 | 4 | 35 | Polyglycerol triglycidyl ether (Mr550):phenyl glycidyl ether=2:1 | 60% | Dioxane/methyl tert-butyl glyceryl ether=1:1 | 40% | Boron tri-fluorid e diethyl ethe-rate | 1‰ |
| Example 7 | 4 | 35 | Polyglycerol triglycidyl ether (Mr550):butyl glycidyl ether=2:1 | 60% | Dioxane/methyl tert-butyl glyceryl ether=1:1 | 40% | Boron tri-fluorid e diethyl ethe-rate | 1‰ |
| Example 8 | 4 | 35 | Polyglycerol glycidyl ether (Mr550) | 70% | Toluene/dioxane =1:1 | 30% | Boron tri-fluorid e diethyl ethe-rate | 1‰ |

(continued)

| Number | Prepolymerizat ion reaction temperature (°C) | Curing and forming temperatu re (°C) | Formula of raw material A (volume ratio) | Raw materi al A% | Formula of pore-forming agent B (volume ratio) | Poreformin g agent B% | Formula of catalyst C | Cataly st C%o |
|---|---|---|---|---|---|---|---|---|
| Example 9 | 4 | 35 | Polypentaerythritol tetraglycidyl ether (Mr700) | 25% | Toluene/dioxane =1:1 | 75% | Boron tri-fluorid e diethyl ethe-rate | 0.3‰ |
| Example 10 | 4 | 35 | Polyglycerol glycidyl ether (Mr550):1,4-butanediol diglycidyl ether=2:1 | 60% | Dioxane/methyl tert-butyl glyceryl ether=1:1 | 40% | Boron tri-fluorid e diethyl ethe-rate | 1‰ |
| Example 11 | 4 | 35 | Trihydroxymethyleth ane triglycidyl ether | 30% | Toluene/dioxane =1:1 | 70% | Boron tri-fluorid e diethyl ethe-rate | 1‰ |
| Example 12 | 4 | 35 | Bisphenol A diglycidyl ether | 30% | Toluene/dioxane =1:1 | 70% | Boron tri-fluorid e diethyl ethe-rate | 1‰ |
| Example 13 | 4 | 35 | Bisphenol F diglycidyl ether | 30% | Toluene/dioxane =1:1 | 70% | Boron tri-fluorid e diethyl ethe-rate | 1‰ |
| Comparati ve Exam-ple 1 | 4 | 35 | Polyglycerol glycidyl ether (Mr550) | 80% | Toluene/dioxane =1:1 | 20% | Boron tri-fluorid e diethyl ethe-rate | 1‰ |
| Comparati ve Exam-ple 2 | 4 | 35 | Polypentaerythritol tetraglycidyl ether (Mr700) | 25% | Toluene/dioxane =1:1 | 75% | Boron tri-fluorid e diethyl ethe-rate | 3‰ |
| Comparati ve Exam-ple 3 | 4 | 35 | Butyl glycidyl ether | 60% | Toluene/dioxane =1:1 | 40% | Boron tri-fluorid e diethyl ethe-rate | 1‰ |

(continued)

| Number | Prepolymerizat ion reaction temperature (°C) | Curing and forming temperatu re (°C) | Formula of raw material A (volume ratio) | Raw materi al A% | Formula of pore-forming agent B (volume ratio) | Poreformin g agent B% | Formula of catalyst C | Cataly st C%o |
|---|---|---|---|---|---|---|---|---|
| Comparati ve Exam-ple 4 | 4 | 35 | Phenyl glycidyl ether | 60% | Toluene/dioxane =1:1 | 40% | Boron tri-fluorid e diethyl ethe-rate | 1‰ |
| Comparati ve Exam-ple 5 | -5 | 35 | Polyglycerol triglycidyl ether (Mr550):phenyl glycidyl ether=2:1 | 60% | Dioxane/methyl tert-butyl glyceryl ether=1:1 | 40% | Boron tri-fluorid e diethyl ethe-rate | 1‰ |
| Comparati ve Exam-ple 6 | 15 | 35 | Polyglycerol triglycidyl ether (Mr550):phenyl glycidyl ether=2:1 | 60% | Dioxane/methyl tert-butyl glyceryl ether=1:1 | 40% | Boron tri-fluorid e diethyl ethe-rate | 1‰ |
| Comparati ve Exam-ple 7 | Same prepolymerization reaction temperature and forming temperature, both at 25°C | | Polyglycerol triglycidyl ether (Mr550):phenyl glycidyl ether=2:1 | 60% | Dioxane/methyl tert-butyl glyceryl ether=1:1 | 40% | Boron tri-fluorid e diethyl ethe-rate | 1‰ |
| Comparati ve Exam-ple 8 | Same prepolymerization reaction temperature and forming temperature, both at -5°C | | Polyglycerol triglycidyl ether (Mr550):phenyl glycidyl ether=2:1 | 60% | Dioxane/methyl tert-butyl glyceryl ether=1:1 | 40% | Boron tri-fluorid e diethyl ethe-rate | 1‰ |
| Comparati ve Exam-ple 9 | 4 | 10 | Polyglycerol triglycidyl ether (Mr550):phenyl glycidyl ether=2:1 | 60% | Dioxane/methyl tert-butyl glyceryl ether= 1:1 | 40% | Boron tri-fluorid e diethyl ethe-rate | 1‰ |
| Comparati ve Exam-ple 10 | 4 | 80 | Polyglycerol triglycidyl ether (Mr550):phenyl glycidyl ether=2:1 | 60% | Dioxane/methyl tert-butyl glyceryl ether=1:1 | 40% | Boron tri-fluorid e diethyl ethe-rate | 1‰ |
| Note: In Table 1, A%, B% and C% represent weight percentages of the raw material A, the pore-forming agent B and the catalyst C in a total weight of "the A and the B", respectively. | | | | | | | | |

**Effect Example**

**Field emission scanning electron microscopy test**

Test objects: Chromatographic materials prepared in Examples 1, 3 and 6.
Test method: The test method is a conventional method in the art.
Test equipment: Germany-Zeiss sigma300, Oxford Energy Dispersive Spectrometer.
Test results: As shown in FIG. 2, FIGs. 2-4 correspondingly show scanning electron microscope images of the chromatographic materials prepared in Examples 1, 3 and 6, respectively. FIGs. 2-4 show that the chromatographic materials prepared in Examples 1, 3 and 6 all have a pore channel structure, wherein FIG. 2 shows that the chromatographic material prepared in Example 1 has largest pore channels, and FIG. 4 shows that the chromatographic material prepared in Example 6 has smallest pore channels. It can be seen that the proportion of the raw material A has an impact on the size of the pore channels, and the pore channels can be adjusted by controlling the proportion of the raw material A.

**(2) Pore size distribution, pore volume and porosity tests**

Test objects: Chromatographic materials prepared in Examples 1-13 and Comparative Examples 1-10.
Test method: Mercury intrusion method. Test equipment: United States-Micromeritics-autoporeV 9620.

Specific test operations:

Certain amounts of the chromatographic materials were weighed, placed in anhydrous ethanol, and subjected to vacuuming for 30 min to replace solvents in the porous materials. The materials were wiped to remove the anhydrous ethanol on surfaces and dried in an oven at 50-60°C for more than 2 h to keep a dry state. Samples were placed on a sample table of mercury intrusion equipment, and mercury was injected into the equipment to carry out tests. Relevant test parameters are as follows:

pressure range: 0.10 to 61,000.00 psia;
sample mass: 0.2104 g;
capillary utilization rate: 28%;
mercury temperature: 15.75°C;
total mass: 111.1832 g;
penetrameter volume: 4.2065 mL;
penetrameter mass: 61.1553 g;
contact angle: 130.000°;
penetrameter ID:15-0295-(15) 3 Bulb, 1.190 Stem, Solid.

Test results: The overall pore uniformity of the chromatographic materials in Examples 2 and 7 can be intuitively observed through FIGs. 5-6 (FIGs. 5-6 are original equipment test images, data in the figures are original test calculation data, ordinates in the figures represent logarithms of differential mercury injection amounts, and abscissas represent pore sizes after analysis and conversion with equipment), and the normal distribution of pore channels is unimodal distribution. FIGs. 5-6 show that the pore size distribution of the chromatographic materials prepared in Examples 2 and 7 is good normal distribution without obvious double peaks (i.e., without the occurrence of a pore size double-distribution phenomenon). Moreover, average pore size results are consistent with electron microscopy results. With increase of the addition proportion of the raw material A, the pore size of the prepared chromatographic material is decreased. The chromatographic material prepared in Example 2 has micron level macropores with an average pore size of 4.2 μm, and the chromatographic material prepared in Example 7 has submicron level macropores with an average pore size of 0.74 μm.
Specific data measured in Examples 1-13 and Comparative Examples 1-6 are shown in Table 2 below.

Table 2

| Number | Pore volume (mL/g) | Average pore size (μm) | Porosity (%) |
|---|---|---|---|
| Example 1 | 1.2 | 2.7 | 58.6 |
| Example 2 | 1.5 | 4.2 | 65.1 |
| Example 3 | 0.86 | 1.4 | 46.8 |
| Example 4 | 1.7 | 4.5 | 66.3 |

(continued)

| Number | Pore volume (mL/g) | Average pore size (μm) | Porosity (%) |
|---|---|---|---|
| Example 5 | 1.6 | 4.3 | 65.9 |
| Example 6 | 0.59 | 0.77 | 49.7 |
| Example 7 | 0.62 | 0.74 | 48.8 |
| Example 8 | 0.58 | 0.51 | 45.9 |
| Example 9 | 1.78 | 5.2 | 67.1 |
| Example 10 | 0.53 | 0.62 | 46.5 |
| Example 11 | 1.33 | 3.4 | 59.7 |
| Example 12 | 1.42 | 3.8 | 60.4 |
| Example 13 | 1.39 | 3.7 | 60.1 |
| Comparative Example 1 | No through pores | | |
| Comparative Example 2 | No through pores | | |
| Comparative Example 3 | Viscous liquid state | | |
| Comparative Example 4 | Viscous liquid state | | |
| Comparative Example 5 | Chromatographic material with cracking and slagging | | |
| Comparative Example 6 | Chromatographic material with shedding and slagging | | |
| Comparative Example 7 | Chromatographic material with shedding and slagging | | |
| Comparative Example 8 | Viscous liquid state | | |
| Comparative Example 9 | Chromatographic material with shedding and slagging | | |
| Comparative Example 10 | No pores | | |
| Note: The average pore size is positively correlated with the porosity and the pore volume, an optimal range of the pore volume is 0.5-1.8 mL/g, an optimal range of the average pore size is 0.4-6 μm, and an optimal range of the porosity is 40-68%. | | | |

It can be seen from Table 2 that on the whole, the pore volume of the chromatographic materials prepared in Examples 1-13 can reach 0.53-1.7 mL/g, the average pore size can reach 0.51-5.2 μm, and the porosity is 45.9-67.1%. By adjusting the type of the raw material A, the type of the pore-forming agent B and the relative proportions of the raw material A and the pore-forming agent B, the pore volume, average pore size and porosity of the chromatographic materials prepared in Examples 1-13 are changed. The pore volume, the average pore size and the porosity in Examples 6-7 are not greatly different and are basically equivalent.

Compared with Example 1, in Comparative Example 1, the content of the raw material A is higher, and the prepared chromatographic material has no pores and cannot meet application demands.

Compared with Example 2, in Comparative Example 2, the content of the catalyst C is higher, and the prepared chromatographic material has no pores and cannot meet application demands.

In Comparative Examples 3-4, the raw material A only adopts a monoepoxy glycidyl ether monomer (butyl glycidyl ether in Comparative Example 3 and phenyl glycidyl ether in Comparative Example 4), and the prepared chromatographic materials are in a viscous state and cannot meet application demands.

Compared with Example 6, in Comparative Example 5, the prepolymerization reaction temperature is lower, and the prepared chromatographic material is cracked and cannot meet application demands.

Compared with Example 6, in Comparative Example 6, the prepolymerization reaction temperature is higher, and the prepared chromatographic material is shed and cannot meet application demands.

Compared with Example 6, in Comparative Example 7, the prepolymerization reaction temperature and the forming temperature are the same and are both at 25°C, and the prepared chromatographic material is shed and cannot meet application demands.

Compared with Example 6, in Comparative Example 8, the prepolymerization reaction temperature and the forming temperature are the same and are both at 5°C, and the prepared chromatographic material is in a viscous state and cannot meet application demands.

Compared with Example 6, in Comparative Example 9, the forming temperature is lower, and the prepared

chromatographic material is shed and cannot meet application demands.

Compared with Example 6, in Comparative Example 10, the forming temperature is higher, and the prepared chromatographic material has no pores and cannot meet application demands.

(3) Epoxy ligand density test

Test objects: Chromatographic materials prepared in Examples 1-13 and Comparative Examples 1-10 after modification with epichlorohydrin.

Since the chromatographic materials themselves contain smaller amounts of epoxy ligands, accurate quantification cannot be achieved by direct determination. Therefore, the chromatographic materials need to be subjected to "modification with epichlorohydrin" first.

The "modification with epichlorohydrin" includes carrying out pretreatment on the chromatographic materials in Examples 1-13 and Comparative Examples 1-10 with the epichlorohydrin before carrying out the epoxy ligand density test. During the pretreatment, use reagents and use amounts thereof are as follows: 10 wt% of the epichlorohydrin, 44 wt% of deionized water, 44 wt% of dimethyl sulfoxide (DMSO), and 2 wt% of sodium hydroxide, wherein the percentages are percentages of the various reagents in a total weight of the reagents, respectively; a mass ratio of the chromatographic materials to the epichlorohydrin is 1:1; a temperature of a pretreatment reaction is 45°C; and a time is 10 h. Except for the conditions specially stated above, other conditions adopt conventional conditions for carrying out the pretreatment in the art.

Test method: Sodium thiosulfate-hydrochloric acid titration method.

The chromatographic materials in Examples 1-13 and Comparative Examples 1-10 modified with the epichlorohydrin were cleaned with deionized water, respectively, and then placed in a sand core funnel for vacuum drying for 10 min. Then, 1 piece (about 0.5 g) of each material was weighed and placed in a grinding conical flask, and 3 mL of 1.3 mol/L sodium thiosulfate and 1-2 drops of a phenolphthalein indicator were added. After being sealed, the conical flask was placed at room temperature to carry out a reaction for 1 h. A supernatant solution obtained after the reaction was titrated with a 0.1 mol/L hydrochloric acid standard solution until the red solution was turned into colorless. An epoxy ligand density was calculated by substituting a volume of the consumed hydrochloric acid standard solution into the following formula:

$$S=M_{HCl}(V_0-V_1)*\rho/W$$

S: epoxy ligand density, mol/L;

$M_{HCl}$: concentration of hydrochloric acid, mol/L;

$V_0$, $V_1$: volume of HCl before and after titration, mL;

$\rho$: medium density (1.2 g/mL);

W: mass of the weighed overall piece.

Test equipment: Acid-base titration device.

Test results are shown in Table 3 below.

Table 3

| Number | Epoxy ligand density (μmol/mL) | Number | Epoxy ligand density (μmol/mL) |
|---|---|---|---|
| Example 1 | 42 | Comparative Example 1 | 6 |
| Example 2 | 39 | Comparative Example 2 | 8 |
| Example 3 | 51 | Comparative Example 3 | / |
| Example 4 | 43 | Comparative Example 4 | / |
| Example 5 | 48 | Comparative Example 5 | / |
| Example 6 | 55 | Comparative Example 6 | / |
| Example 7 | 56 | Comparative Example 7 | / |
| Example 8 | 38 | Comparative Example 8 | / |

(continued)

| Number | Epoxy ligand density (μmol/mL) | Number | Epoxy ligand density (μmol/mL) |
|---|---|---|---|
| Example 9 | 43 | Comparative Example 9 | / |
| Example 10 | 53 | Comparative Example 10 | / |
| Example 11 | 45 | | |
| Example 12 | 37 | | |
| Example 13 | 38 | | |
| Note: In Table 3, "/" means that the structure of the chromatographic material does not meet requirements (for example, the chromatographic material has no through pores; the chromatographic material is in a viscous state; the chromatographic material is shed or slagged; and the chromatographic material has no pores, etc.), continuous measurement of epoxy ligand density data is meaningless, and thus, the data are not measured. | | | |

According to the data in Table 3 above, after modification with the epichlorohydrin by a conventional epoxidation modification method, an epoxy group density of the prepared chromatographic materials is at the level of 35-60 μmol/mL on the whole, which is equivalent to an epoxy group density of a chromatographic filler microsphere and can meet use requirements of chromatographic separation and analysis. Moreover, the size of the epoxy group density is positively correlated with the use amount of the raw material A and an epoxy value of a polymer or a monomer in the raw material A used during preparation of the chromatographic materials. By adjusting the type of the raw material A, the type of the pore-forming agent B, the relative proportions of the raw material A and the pore-forming agent B, the use amount of the catalyst and other conditions, the epoxy ligand density of the chromatographic materials prepared in Examples 1-13 is changed. The epoxy ligand density in Examples 6-7 is not greatly different and is basically equivalent. Specifically,

Compared with Example 1, in Comparative Example 1, the content of the raw material A is higher, and the prepared chromatographic material has the epoxy ligand density of only 6 μmol/mL and cannot meet application demands.

Compared with Example 2, in Comparative Example 2, the content of the catalyst C is higher, and the prepared chromatographic material has the epoxy ligand density of only 8 μmol/mL and cannot meet application demands.

In Comparative Examples 3-4, the raw material A only adopts a monoepoxy glycidyl ether monomer (butyl glycidyl ether in Comparative Example 3 and phenyl glycidyl ether in Comparative Example 4), the prepared chromatographic materials are in a viscous state, and the epoxy ligand density data of the materials cannot be measured.

Compared with Example 6, in Comparative Example 5, the prepolymerization reaction temperature is lower, the prepared chromatographic material is cracked, and the epoxy ligand density data of the material cannot be measured.

Compared with Example 6, in Comparative Example 6, the prepolymerization reaction temperature is higher, the prepared chromatographic material is shed, and the epoxy ligand density data of the material cannot be measured.

Compared with Example 6, in Comparative Example 7, the prepolymerization reaction temperature and the forming temperature are the same and are both at 25°C, the prepared chromatographic material is shed, and the epoxy ligand density data of the material cannot be measured.

Compared with Example 6, in Comparative Example 8, the prepolymerization reaction temperature and the forming temperature are the same and are both at 5°C, the prepared chromatographic material is in a viscous state, and the epoxy ligand density data of the material cannot be measured.

Compared with Example 6, in Comparative Example 9, the forming temperature is lower, the prepared chromatographic material is shed, and the epoxy ligand density data of the material cannot be measured.

Compared with Example 6, in Comparative Example 10, the forming temperature is higher, the prepared chromatographic material has no pores, and the epoxy ligand density data of the material cannot be measured.

**(4) Biomacromolecule yield test**

Test objects: Chromatographic materials prepared in Examples 6 and 7.

Test method: The content of a protein was determined by chromatography equipment and a chromatographic column (using a 1 mL monolithic column tooling of BIA, internally equipped with the chromatographic materials in Examples 6 and 7 for testing) using a lorry method (that is, an experimental method for determining the content of a protein using a film-phenol reagent method), and a hydrophobic effect of the chromatographic materials in Examples 6 and 7 as well as the yield of bovine serum albumin after chromatographic binding and elution were determined. Chromatographic mobile phases included an equilibrium solution A containing a phosphate buffer solution PB (pH=6.5) and 0.8 M ammonium sulfate, and an elution solution B containing a phosphate buffer solution PB (pH=6.5), respectively. A

chromatographic flow rate was 1 mL/min. After equilibration was carried out with 10 mL of the equilibrium solution A, 30 mL of a sample was injected (the sample was bovine serum albumin dissolved in the equilibrium solution, with a concentration of 2 mg/mL), the chromatographic column was rinsed with 5-10 mL of the equilibrium solution and then eluted with the elution solution B with an elution volume of 3-4 mL, and an eluent was collected to determine the protein concentration.

Test equipment: Akata explore 100 chromatography equipment.

Test results are shown in Table 4 below.

Table 4

| Number | Injection amount of bovine serum albumin (mg) | Elution volume of elution solution B (mL) | Concentration of elution solution B (mg/mL) | Amount of recovered bovine serum albumin (mg) | Yield (%) |
|---|---|---|---|---|---|
| Example 6 | 30mg | 3.6 | 7.9 | 28.5 | 95 |
| Example 7 | 30mg | 3.1 | 9.4 | 29.4 | 98 |

It can be seen from the data in Table 4 that bovine serum albumin chromatography yields of the chromatographic materials prepared in Examples 6 and 7 are above 90% (generally, a single-step chromatography yield above 90% is relatively ideal). The bovine serum albumin yield of the chromatographic material prepared in Example 6 is 95%, and the bovine serum albumin yield of the chromatographic material prepared in Example 7 is 98%. The reasons may be that because the hydrophobic effect of the phenyl is higher than that of the butyl, that is, under the same mobile phases, the phenyl has a stronger binding effect, a larger elution volume and higher elution intensity, the butyl has a higher yield under the condition of the same elution solution. It is indicated that non-specific irreversible adsorption of hydrophobic chromatography of the chromatographic material prepared in Example 7 is lower than that of the chromatographic material prepared in Example 6.

**(5) Sample loading capacity test at different flow rates**

Test object: Chromatographic material prepared in Example 6.

Test method: The content of a protein was determined by chromatography equipment and a chromatographic column (using a 1 mL monolithic column tooling of BIA, internally equipped with the chromatographic material in Example 6 for testing) using a lorry method. Capacities (that is, loading capacities) of bovine serum albumin adsorbed by the chromatographic material prepared in Example 6 at different flow rates were determined. Mobile phases and a chromatography method were the same as those in the biomacromolecule yield test (4).

Test equipment: Akata explore 100 chromatography equipment.

Test results are shown in Table 5 and FIG. 7.

Table 5

| Flow rate mL/min | Retention time (s) | DBC binding capacity of bovine serum protein (mg/mL) |
|---|---|---|
| 0.5 | 120 | 26.9 |
| 1 | 1 | 27.8 |
| 2 | 30 | 28.9 |
| 3 | 20 | 26.7 |
| 6 | 10 | 22.8 |
| Note: DBC refers to a dynamic binding capacity of the bovine serum albumin on the chromatographic material. | | |

It can be seen from Table 5 and FIG. 7 that increase of the flow rate has a smaller impact on protein adsorption. A conventional chromatographic microsphere medium usually has a higher flow rate within a retention time of 2 min (120 s) and generally needs to be retained for 3-4 min or even a longer time. However, the retention time of the chromatographic material prepared in Example 6 of the present invention is even shorter. Moreover, when the flow rate is increased, the loading capacity of a traditional chromatographic microsphere filler is decreased by several times. However, the loading capacity of the chromatographic material prepared in Example 6 of the present invention is changed at a smaller amplitude.

**(6) Inter-batch stability test**

Test object: Chromatographic material prepared in Example 7.

Test method: Chromatography equipment and a chromatographic column (using a 1 mL monolithic column tooling of BIA, internally equipped with the chromatographic material in Example 7 for testing). The inter-batch stability of a chromatography process was tested. A test sample was a mixed solution (prepared with the above equilibrium solution A, with final concentrations of two proteins both at 2 mg/mL) of two proteins including bovine serum albumin (Yancheng Saibao Biotechnology Co., Ltd.) and human immunoglobulin IgG (Guangdong Shuanglin Biopharmaceutical Co., Ltd.), and mobiles phase and a chromatography method were the same as those in the biomacromolecule yield test (4).

Test equipment: Akata explore 100 chromatography equipment.

Test results are shown in Table 6.

Table 6

| Batch | Maximum absorption peak of BSA within 0-8 min mAU | Maximum absorption peak of IgG within 8-13.5 min mAU |
|---|---|---|
| 1 | 160 | 125 |
| 2 | 150 | 124 |
| 3 | 150 | 120 |
| 4 | 145 | 120 |
| 5 | 140 | 123 |
| 6 | 141 | 122 |
| 7 | 140 | 120 |
| 8 | 143 | 120 |
| 9 | 142 | 121 |
| 10 | 140 | 119 |
| 11 | 141 | 127 |
| 12 | 137 | 122 |
| 13 | 139 | 120 |
| 14 | 138 | 118 |

The inter-batch stability of the chromatography process can be intuitively seen from the data in Table 6, a normal distribution curve is basically consistent, the repeatability is higher, peaks appearing within the retention time of 0-8 min are characteristic peaks of the bovine serum albumin, and peaks appearing within the retention time of 8-13.5 min are characteristic peaks of the human immunoglobulin IgG. Since the human immunoglobulin IgG has greater hydrophobicity than the bovine serum albumin, the peaks appear later. The peak appearance time and the peak appearance size have better inter-batch overlapping (specifically referring to the data in Table 6). Slight deviations of the data in Table 6 are caused by artificial and manual sample injection during a production process, and the errors can be eliminated by adopting automated sample injection and a chromatography process during the production process.

## Claims

1. A raw material composition for a chromatographic material, based on a total weight of a raw material A and a pore-forming agent B as 100%, comprising the following components:

   20%-70% of the raw material A;
   30%-80% of the pore-forming agent B; and
   0.1‰- 1‰ of a catalyst C;
   wherein the raw material A comprises a substance containing a polyepoxy group.

2. The raw material composition for a chromatographic material according to claim 1, wherein the raw material

composition satisfies one or more of the following conditions a-k:

a. the substance containing a polyepoxy group is a polyepoxy glycidyl ether substance or a polyepoxy glycidyl ester substance;

the glycidyl ether substance is preferably one or more of monomers that satisfy the following structural formula I:

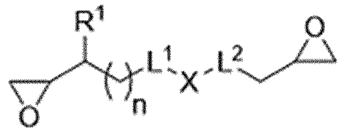

I

wherein in the structural formula I, $R^1$ is selected from a hydrogen atom, substituted or unsubstituted $C_1$-$C_{10}$ alkyl, or an epoxy group;

n is a positive integer ranging from 0-10;

$L^1$ is selected from an oxygen atom or a nitrogen atom;

$L^2$ is selected from an oxygen atom or a nitrogen atom; and

X is selected from substituted or unsubstituted $C_1$-$C_{10}$ alkylene, substituted or unsubstituted $C_3$-$C_{10}$ cycloalkylene,

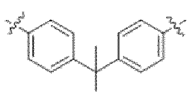 , 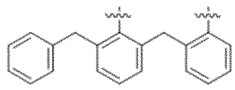 , 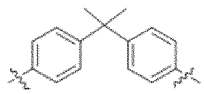 , 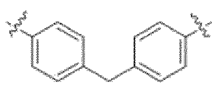 ,

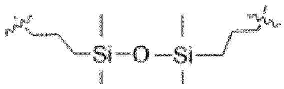 ,

or a benzene ring;

the glycidyl ether substance is preferably one or more of the following monomers (a)-(m):

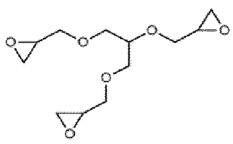

(a)

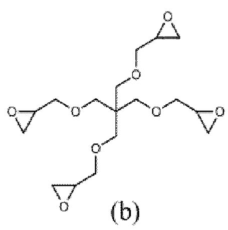

(b)

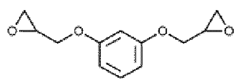

(c)

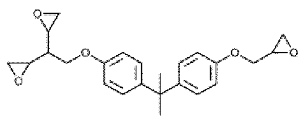

(d)

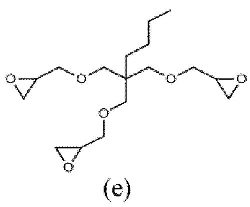

(e)

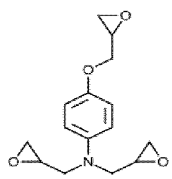

(f)

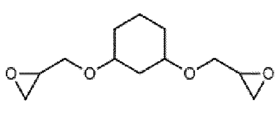

(g)

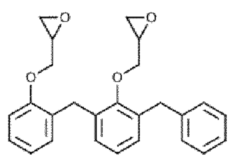

(h)

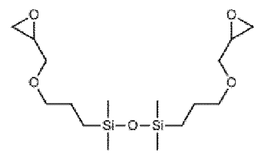

(i)

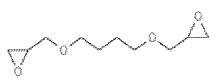
(j)

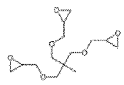
(k)

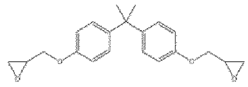
(l)

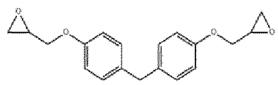
(m)

.

the glycidyl ether substance is preferably one or more of polymers that satisfy the following structural formula II:

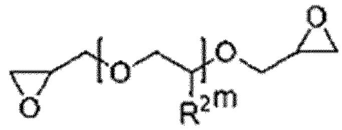
II

,

wherein in the structural formula II, $R^2$ is selected from a hydrogen atom, substituted or unsubstituted $C_1$-$C_{10}$ alkyl, or

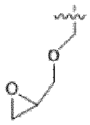

; and

m is a positive integer ranging from 2-40;

the glycidyl ether substance is preferably one or more of the following polymers (1)-(4):

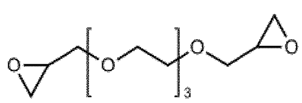
(1)

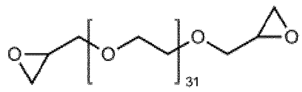
(2)

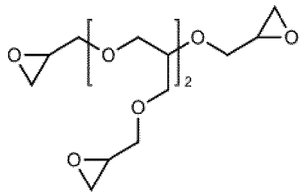
(3)

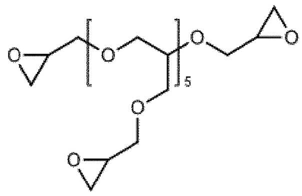
(4)

;

the glycidyl ester substance is preferably one or more of monomers that satisfy the following structural formula III:

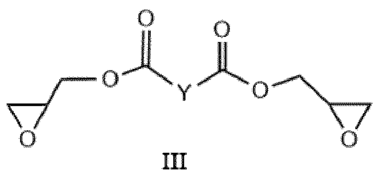
III

wherein in the structural formula III, Y is selected from substituted or unsubstituted $C_1$-$C_{10}$ alkylene, substituted or unsubstituted $C_3$-$C_{10}$ cycloalkylene, or a benzene ring;

the glycidyl ester substance is preferably the following monomers (A) and/or (B):

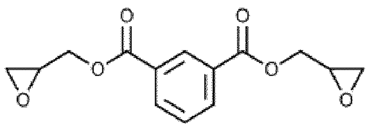

(A)

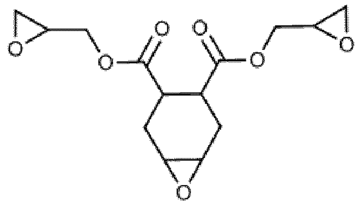

(B)

b. the substance containing a polyepoxy group is one or more of the following monomers (I)-(IV):

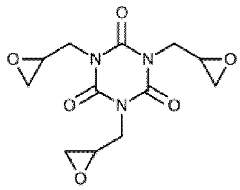

(I)

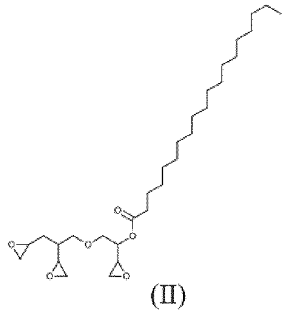

(II)

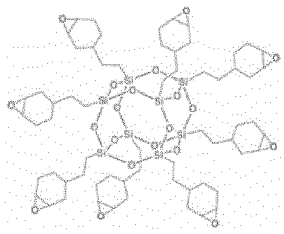

(III)

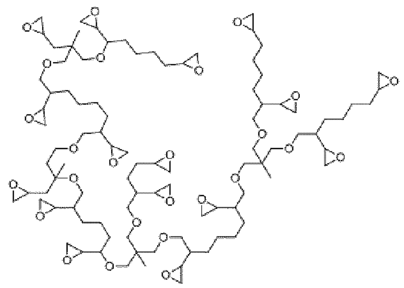

(IV)

;

c. the substance containing a polyepoxy group is a polyepoxy glycidyl ether monomer and/or a polyepoxy glycidyl ether polymer;
d. a molecular weight of the substance containing a polyepoxy group is 300-2,000, and for example, the molecular weight is 550 or 700;
e. a weight percentage of the raw material A in the total weight of the raw material A and the pore-forming agent B is 22%-70%, for example, 25%, 30%, 35%, 40%, 45%, 50%, 55%, 58%, 65%, or 68%;
f. the raw material A further comprises a substance containing a monoepoxy group;
the substance containing a monoepoxy group is preferably a monoepoxy glycidyl ether substance or a monoepoxy glycidyl ester substance;
g. the pore-forming agent B is one or more of chemical solvents that are mutually soluble with the raw material A and the catalyst C, preferably one or more of toluene, xylene, dichloromethane, dichloroethane, dioxane, formamide, dimethyl sulfoxide, and methyl tert-butyl ether, and more preferably one or more of the toluene, the dioxane, and the methyl tert-butyl ether, for example, the toluene and the dioxane, the toluene and the methyl tert-butyl ether, or the dioxane and the methyl tert-butyl ether;
h. when the pore-forming agent B is a mixture of two different substances, a volume ratio of the two different substances is preferably (0.1-9):1, for example, 0.5:1, 1:1, 2:1, 3:1, 5:1, or 7:1;
i. a weight percentage of the pore-forming agent B in the total weight of the raw material A and the pore-forming agent B is preferably 35%-80%, for example, 40%, 45%, 50%, 60%, 65%, 70%, 75%, or 78%;
j. the catalyst C is Lewis acid and/or a complex of Lewis acid; and
k. a weight percentage of the catalyst C in the total weight of the raw material A and the pore-forming agent B is

preferably 0.3‰-1‰, for example, 0.4‰, 0.5‰, 0.6‰, 0.7‰, 0.8‰, or 0.9‰.

**3.** The raw material composition for a chromatographic material according to at least one of claims 1-2, wherein the raw material composition satisfies one or more of the following conditions a-g:

a. the polyepoxy glycidyl ether monomer is glycerol triglycidyl ether and/or pentaerythritol tetraglycidyl ether;
b. the polyepoxy glycidyl ether polymer is polyglycerol glycidyl ether and/or polypentaerythritol tetraglycidyl ether;
c. when the substance containing a polyepoxy group is a mixture of the polyepoxy glycidyl ether monomer and the polyepoxy glycidyl ether polymer, a mixing volume ratio of the polyepoxy glycidyl ether monomer to the polyepoxy glycidyl ether polymer is (0.1-9):1, for example, 1:1, 2:1, 3:1, 4:1, 5:1, 6:1, 7:1, or 8:1;
d. the monoepoxy glycidyl ether substance is phenyl glycidyl ether and/or butyl glycidyl ether;
e. the monoepoxy glycidyl ester substance is one or more of phenyl glycidyl ether, butyl glycidyl ether, pentyl glycidyl ether, octyl glycidyl ether, octadecyl glycidyl ether, and naphthyl glycidyl ether, preferably the phenyl glycidyl ether and/or the butyl glycidyl ether;
f. the Lewis acid is one or more of aluminum trichloride, boron trifluoride, ferric bromide, ferric chloride, zinc chloride, niobium trichloride or niobium tetrachloride, and sulfur trioxide, for example, the boron trifluoride;
g. the complex of Lewis acid is one or more of boron trifluoride diethyl etherate, boron trifluoride acetonitrile, boron fluoride dimethyl carbonate, and boron trifluoride ethylamine;

preferably, the raw material A is polyglycerol triglycidyl ether and a monoepoxy glycidyl ether monomer; the pore-forming agent B is one or more of the toluene, the xylene, the dichloromethane, the dichloroethane, the dioxane, the formamide, the dimethyl sulfoxide, and the methyl tert-butyl ether; and the monoepoxy glycidyl ether monomer is preferably the phenyl glycidyl ether and/or the butyl glycidyl ether;
preferably, the raw material A is the polyglycerol triglycidyl ether and the monoepoxy glycidyl ether monomer; the pore-forming agent B is one or more of the toluene, the dioxane, and methyl tert-butyl glyceryl ether; and the monoepoxy glycidyl ether monomer is preferably the phenyl glycidyl ether and/or the butyl glycidyl ether;
preferably, based on the total weight of the raw material A and the pore-forming agent B as 100%, the raw material composition for a chromatographic material comprises the following components: 50-70% of the raw material A, wherein the raw material A is the polyglycerol triglycidyl ether and the monoepoxy glycidyl ether monomer, and the monoepoxy glycidyl ether monomer is the phenyl glycidyl ether and/or the butyl glycidyl ether; and 30-50% of the pore-forming agent B, wherein the pore-forming agent B is "the dioxane and the methyl tert-butyl glyceryl ether" or "the toluene and the dioxane"; and
preferably, based on the total weight of the raw material A and the pore-forming agent B as 100%, the raw material composition for a chromatographic material comprises the following components: 60% of the raw material A, wherein the raw material A is the polyglycerol triglycidyl ether with a molecular weight of 550 and the butyl glycidyl ether, and a volume ratio of the polyglycerol triglycidyl ether with the molecular weight of 550 to the butyl glycidyl ether is 2:1; 40% of the pore-forming agent B, wherein the pore-forming agent B is the dioxane and the methyl tert-butyl glyceryl ether, and a volume ratio of the dioxane to the methyl tert-butyl glyceryl ether is 1:1; and 1‰ of the catalyst C, wherein the catalyst is the boron trifluoride diethyl etherate.

**4.** A chromatographic material, comprising the raw material composition according to at least one of claims 1-3, wherein

through pores are distributed on the chromatographic material, and an average pore size of the through pores is 0.2-10 μm;
a porosity of the through pores is 30-80%;
a pore volume of the through pores is 0.5-2.5 mL/g; and
an epoxy ligand density of the chromatographic material is 30-80 μmol/mL.

**5.** The chromatographic material according to claim 4, wherein the chromatographic material satisfies one or more of the following conditions a-d:

a. the average pore size of the through pores is 0.4-8 μm, for example, 0.44 μm, 1.4 μm, 0.74 μm, 0.8 μm, 2 μm, 2.7 μm, 3.4 μm, 3.7 μm, 3.8 μm, 4.2 μm, 4.3 μm, 4.5 μm, 5.2 μm, 6 μm, 7 μm, or 7.5 μm;
b. the porosity of the through pores is 40-68%, for example, 45.9%, 46.5%, 46.8%, 48.8%, 49.7%, 59.7%, 58.6%, 60.1%, 60.4%, 65.1%, 65.9%, or 66.3%;
c. the pore volume of the through pores is 0.5-1.8 mL/g, for example, 0.53 mL/g, 0.58 mL/g, 0.59 mL/g, 0.62 mL/g, 0.86 mL/g, 1.2 mL/g, 1.33 mL/g, 1.39 mL/g, 1.42 mL/g, 1.5 mL/g, 1.6 mL/g, 1.7 mL/g, or 1.78 mL/g;
d. the epoxy ligand density of the chromatographic material is 35-60 μmol/mL, for example, 39 μmol/mL, 42

μmol/mL, 43 μmol/mL, 48 μmol/mL, or 51 μmol/mL; and

preferably, the chromatographic material simultaneously satisfies the conditions a-d.

**6.** A method for preparing a chromatographic material, comprising the steps of: allowing the raw material composition for a chromatographic material according to at least one of claims 1-3 to undergo a prepolymerization reaction and then carrying out forming, wherein

a temperature of the prepolymerization reaction is 0°C-10°C;
a temperature of the forming is 25°C-60°C;
the temperature of the prepolymerization reaction is preferably 2°C-8°C;
a time of the prepolymerization reaction is preferably 15-60 min, and more preferably 20-40 min, for example, 30 min;
the temperature of the forming is preferably 30°C-40°C;
a time of the forming is preferably 2 h-12 h, and more preferably 4 h-8 h;
preferably, a standing state is maintained during the forming without being affected by an external force; preferably, the method for preparing a chromatographic material comprises the steps of: after allowing the raw material composition for a chromatographic material to undergo the prepolymerization reaction at 2°C-8°C, carrying out the forming at 30°C-40°C, wherein in the raw material composition for a chromatographic material, the raw material A is the polyglycerol triglycidyl ether and the monoepoxy glycidyl ether monomer; the pore-forming agent B is one or more of the toluene, the xylene, the dichloromethane, the dichloroethane, the dioxane, the formamide, the dimethyl sulfoxide, and the methyl tert-butyl ether; and the monoepoxy glycidyl ether monomer is preferably the phenyl glycidyl ether and/or the butyl glycidyl ether;
preferably, the method for preparing a chromatographic material comprises the steps of: after allowing the raw material composition for a chromatographic material to undergo the prepolymerization reaction at 2°C-8°C, carrying out the forming at 30°C-40°C, wherein in the raw material composition for a chromatographic material, the raw material A is the polyglycerol triglycidyl ether and the monoepoxy glycidyl ether monomer; the pore-forming agent B is one or more of the toluene, the dioxane, and the methyl tert-butyl glyceryl ether; and the monoepoxy glycidyl ether monomer is preferably the phenyl glycidyl ether and/or the butyl glycidyl ether;
preferably, the method for preparing a chromatographic material comprises the steps of: after allowing the raw material composition for a chromatographic material to undergo the prepolymerization reaction at 2°C-8°C, carrying out the forming at 30°C-40°C, wherein in the raw material composition for a chromatographic material, based on the total weight of the raw material A and the pore-forming agent B as 100%, the raw material composition for a chromatographic material comprises the following components: 50-70% of the raw material A, wherein the raw material A is the polyglycerol triglycidyl ether and the monoepoxy glycidyl ether monomer, and the monoepoxy glycidyl ether monomer is the phenyl glycidyl ether and/or the butyl glycidyl ether; and 30-50% of the pore-forming agent B, wherein the pore-forming agent B is "the dioxane and the methyl tert-butyl glyceryl ether" or "the toluene and the dioxane"; and
preferably, the method for preparing a chromatographic material comprises the steps of: after allowing the raw material composition for a chromatographic material to undergo the prepolymerization reaction at 2°C-8°C, carrying out the forming at 30°C-40°C, wherein in the raw material composition for a chromatographic material, based on the total weight of the raw material A and the pore-forming agent B as 100%, the raw material composition for a chromatographic material comprises the following components: 60% of the raw material A, wherein the raw material A is the polyglycerol triglycidyl ether with a molecular weight of 550 and the butyl glycidyl ether, and a volume ratio of the polyglycerol triglycidyl ether with the molecular weight of 550 to the butyl glycidyl ether is 2:1; 40% of the pore-forming agent B, wherein the pore-forming agent B is the dioxane and the methyl tert-butyl glyceryl ether, and a volume ratio of the dioxane to the methyl tert-butyl glyceryl ether is 1:1; and 1‰ of the catalyst C, wherein the catalyst is the boron trifluoride diethyl etherate.

**7.** A chromatographic material prepared by the preparation method according to claim 6.

**8.** A monolithic column, comprising the raw material composition according to at least one of claims 1-3 or the chromatographic material according to at least one of claims 4-5 and 7.

**9.** A monolithic column, wherein through pores are distributed in the monolithic column, and an average pore size of the through pores is 0.2-10 μm;

a porosity of the through pores is 30-80%;

a pore volume of the through pores is 0.5-2.5 mL/g; and
an epoxy ligand density of the monolithic column is 30-80 μmol/mL.

**10.** The monolithic column according to claim 9, wherein the monolithic column satisfies one or more of the following conditions a-d:

a. the average pore size of the through pores is 0.4-8 μm, for example, 0.44 μm, 1.4 μm, 0.74 μm, 0.8 μm, 2 μm, 2.7 μm, 3.4 μm, 3.7 μm, 3.8 μm, 4.2 μm, 4.3 μm, 4.5 μm, 5.2 μm, 6 μm, 7 μm, or 7.5 μm;
b. the porosity of the through pores is 40-68%, for example, 45.9%, 46.5%, 46.8%, 48.8%, 49.7%, 59.7%, 58.6%, 60.1%, 60.4%, 65.1%, 65.9%, or 66.3%;
c. the pore volume of the through pores is 0.5-1.8 mL/g, for example, 0.53 mL/g, 0.58 mL/g, 0.59 mL/g, 0.62 mL/g, 0.86 mL/g, 1.2 mL/g, 1.33 mL/g, 1.39 mL/g, 1.42 mL/g, 1.5 mL/g, 1.6 mL/g, 1.7 mL/g, or 1.78 mL/g;
d. the epoxy ligand density of the monolithic column is 35-60 μmol/mL, for example, 39 μmol/mL, 42 μmol/mL, 43 μmol/mL, 48 μmol/mL, or 51 μmol/mL; and

preferably, the monolithic column simultaneously satisfies the conditions a-d.

**11.** A chromatopile, comprising the raw material composition according to at least one of claims 1-3, the chromatographic material according to at least one of claims 4-5 and 7, or the monolithic column according to at least one of claims 8-10.

**12.** Use of the raw material composition according to at least one of claims 1-3, the chromatographic material according to at least one of claims 4-5 and 7, or the monolithic column according to at least one of claims 8-10 in the field of purification of biomacromolecules.

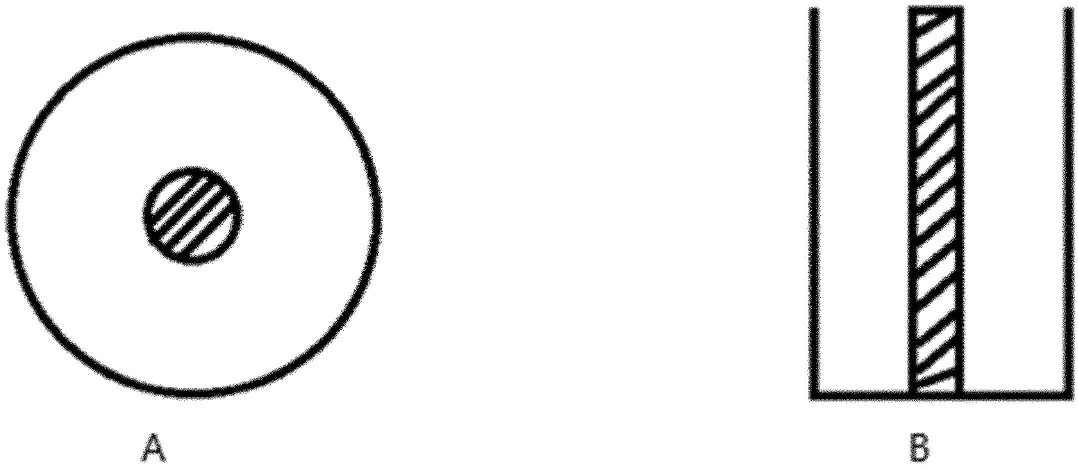


FIG. 1

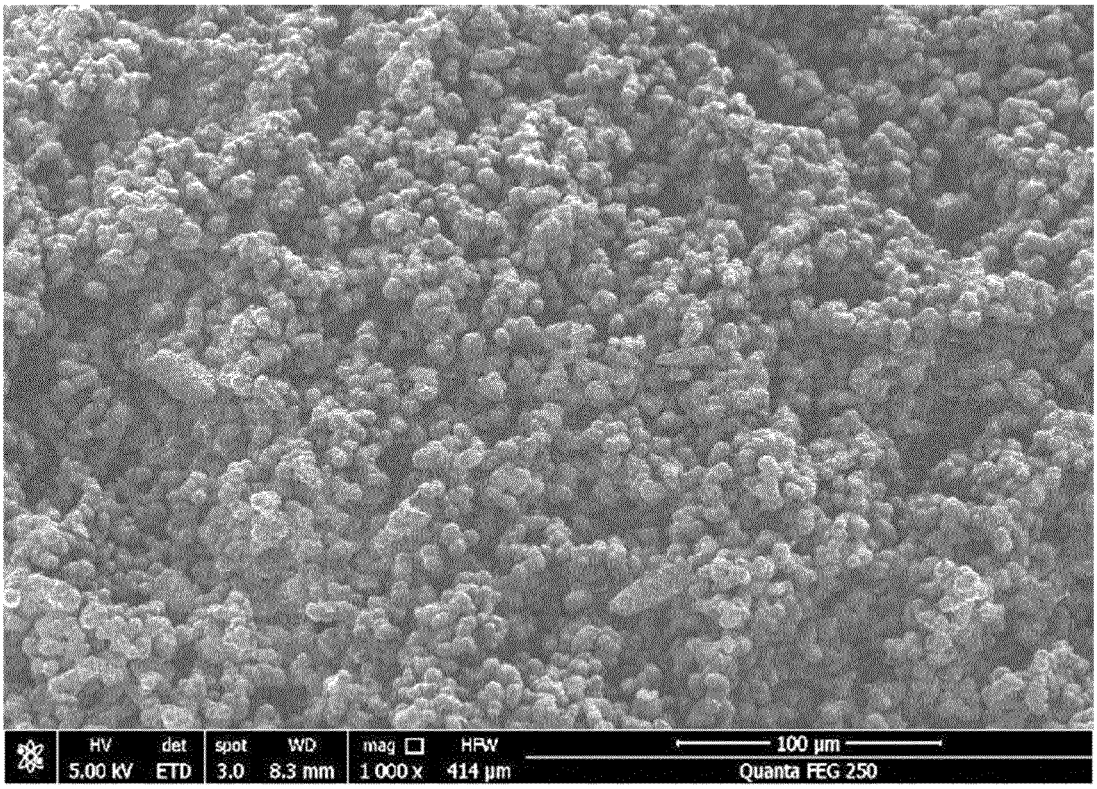
HV
5.00 kV
det
ETD
spot
3.0
WD
8.3 mm
mag
1 000 x
HFW
414 µm
100 µm
Quanta FEG 250

FIG. 2

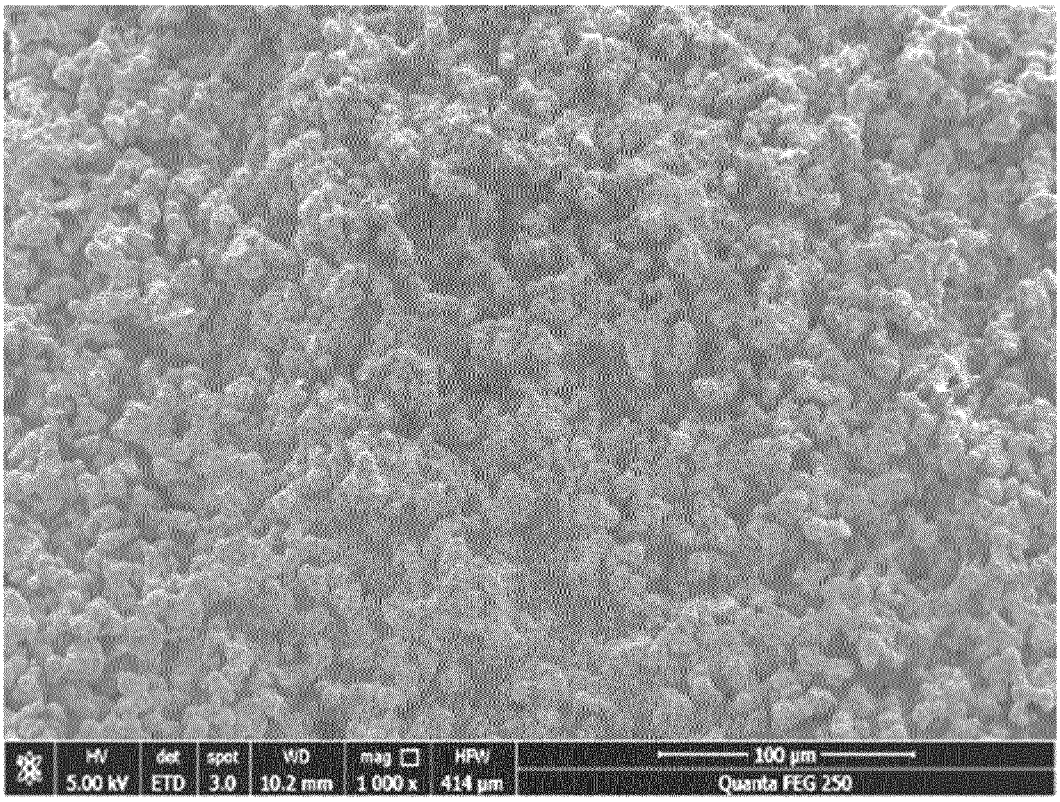
HV
5.00 kV
det
ETD
spot
3.0
WD
10.2 mm
mag
1 000 x
HFW
414 μm
100 μm
Quanta FEG 250

FIG. 3

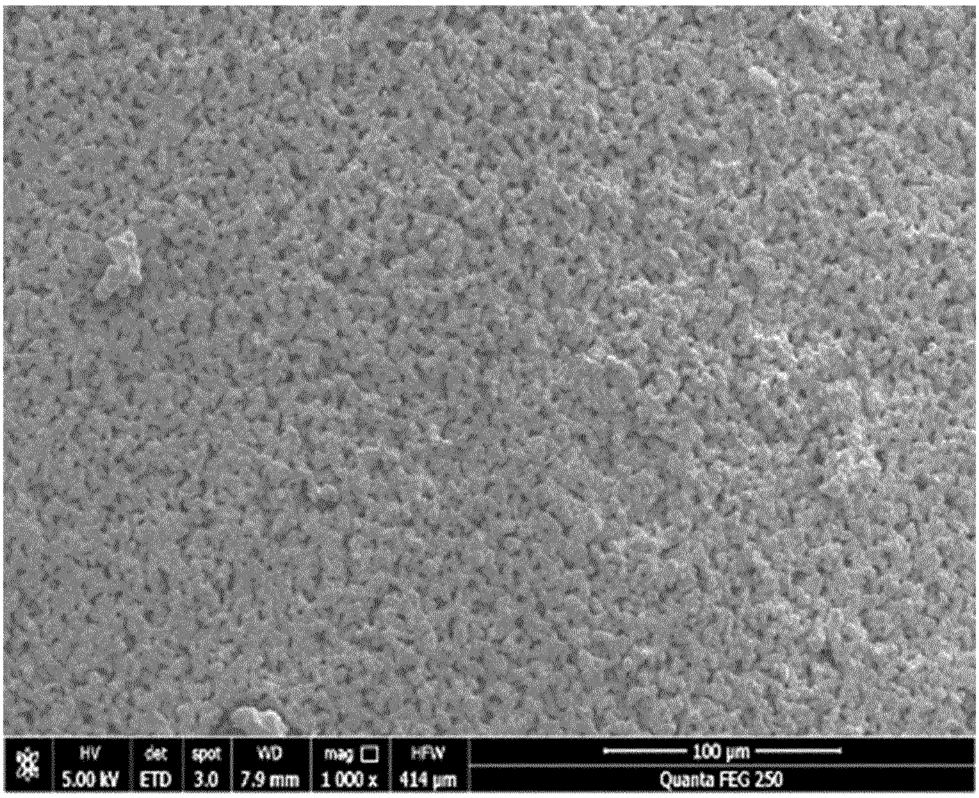
HV
5.00 kV
det
ETD
spot
3.0
WD
7.9 mm
mag
1 000 x
HFW
414 μm
100 μm
Quanta FEG 250

FIG. 4

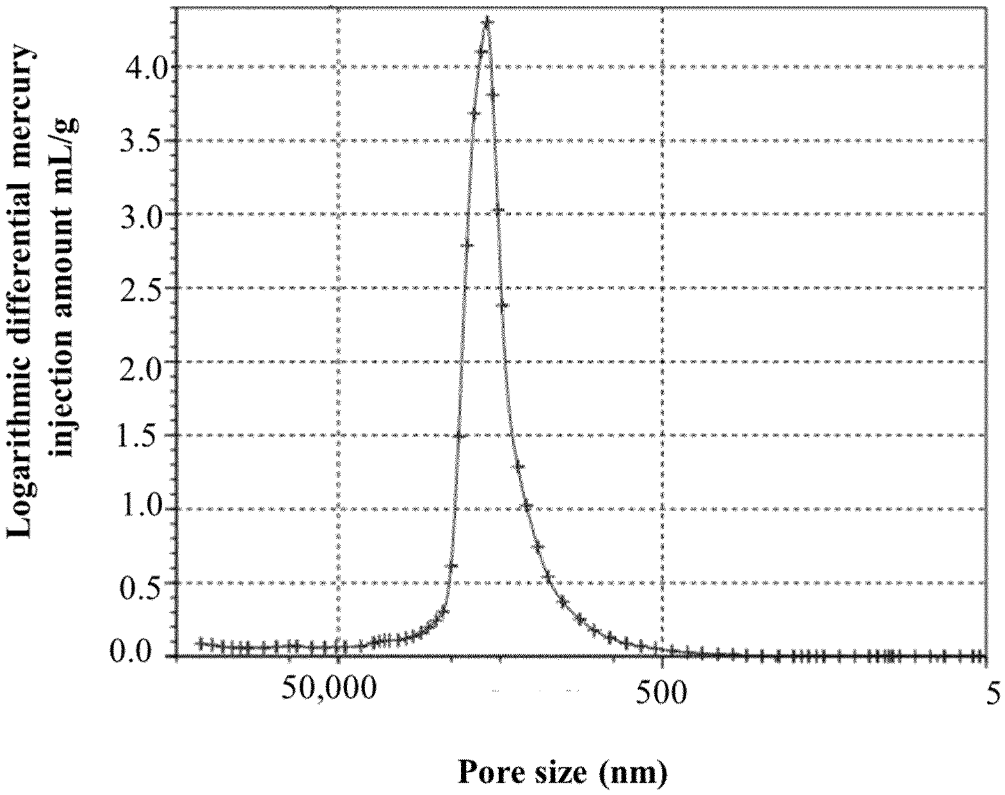
Logarithmic differential mercury injection amount mL/g
4.0
3.5
3.0
2.5
2.0
1.5
1.0
0.5
0.0
50,000
500
5
Pore size (nm)

FIG. 5

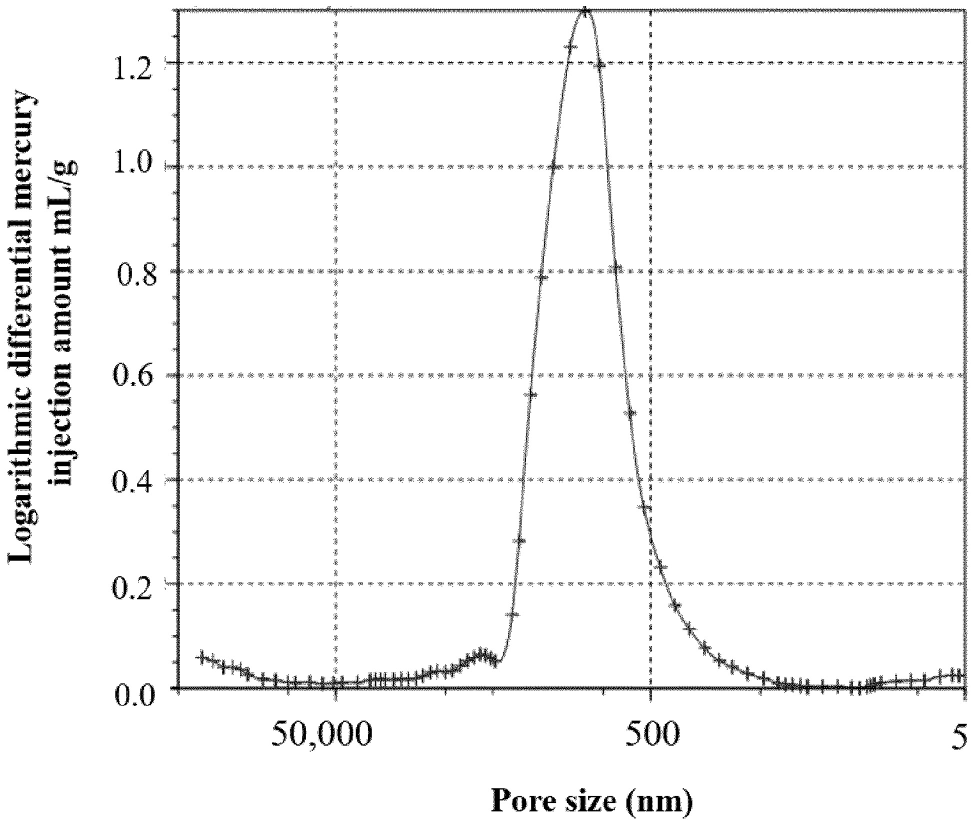
Logarithmic differential mercury injection amount mL/g
1.2
1.0
0.8
0.6
0.4
0.2
0.0
50,000
500
5
Pore size (nm)

FIG. 6

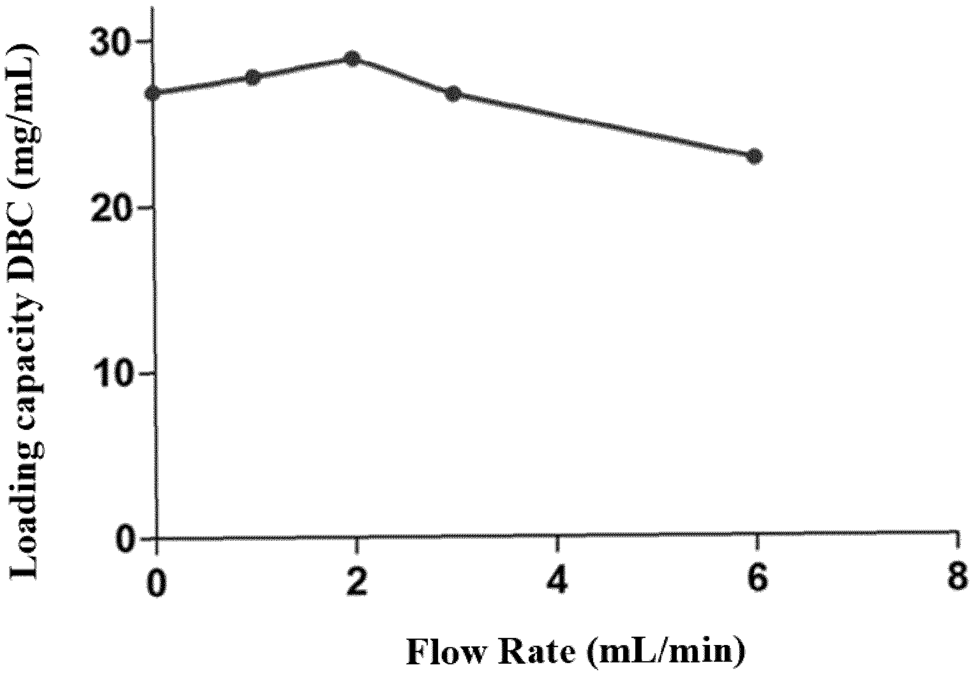


FIG. 7

**INTERNATIONAL SEARCH REPORT**

International application No. **PCT/CN2023/138138**

**A. CLASSIFICATION OF SUBJECT MATTER**

C08G59/02(2006.01)i； B01D15/20(2006.01)i

According to International Patent Classification (IPC) or to both national classification and IPC

**B. FIELDS SEARCHED**

Minimum documentation searched (classification system followed by classification symbols)

IPC： C08G； B01D

Documentation searched other than minimum documentation to the extent that such documents are included in the fields searched

Electronic data base consulted during the international search (name of data base and, where practicable, search terms used)

CNTXT, WPABS, ENTXT, ENTXTC, CNKI, ISI Web of Science: 上海渔霁生物技术有限公司, 张超, 谢磊, 王叔江, 朱文瑾, 层析, 整体柱, 色谱柱, 多环氧, 环氧, 甘油醚, 甘油酯, 致孔剂, 溶剂, 催化剂, 路易斯酸, 三氟化硼, 甲苯, 二甲苯, 二氧六环, 甲基叔丁基醚, 多孔, 贯通孔, chromatography, monolithic column, column, epox+, polyglycidylether, porogen, pore form + agent, solvent, catalyst, lewis acid, boron trifluoride, toluene, dioxane, methyl-tert-butyl-ether, MTBE, porous, through hole

**C. DOCUMENTS CONSIDERED TO BE RELEVANT**

| Category* | Citation of document, with indication, where appropriate, of the relevant passages | Relevant to claim No. |
|---|---|---|
| X | WO 2008135246 A1 (TECHNISCHE UNIVERSITAET MUENCHEN) 13 November 2008 (2008-11-13)<br>description, pages 5-9, and embodiment 1 | 1-12 |
| Y | CN 101130171 A (INSTITUTE OF CHEMISTRY, CHINESE ACADEMY OF SCIENCES) 27 February 2008 (2008-02-27)<br>embodiment 1 | 1-12 |
| Y | CN 113512152 A (SHENZHEN LIFOTRONIC TECHNOLOGY CO., LTD.) 19 October 2021 (2021-10-19)<br>description, paragraphs 7-17 | 1-12 |
| A | CN 101861518 A (SHIMADZU CORP.) 13 October 2010 (2010-10-13)<br>entire document | 1-12 |
| A | CN 105572269 A (SICHUAN UNIVERSITY) 11 May 2016 (2016-05-11)<br>entire document | 1-12 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 February 2024** | **23 February 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2023/138138**

**C. DOCUMENTS CONSIDERED TO BE RELEVANT**

| Category* | Citation of document, with indication, where appropriate, of the relevant passages | Relevant to claim No. |
|---|---|---|
| A | CN 110437424 A (WEIHAI CY DENDRIMER TECHNOLOGY CO., LTD.) 12 November 2019 (2019-11-12)<br>entire document | 1-12 |
| A | CN 112980037 A (SUZHOU XINGPU BIOTECHNOLOGY CO., LTD.) 18 June 2021 (2021-06-18)<br>entire document | 1-12 |
| A | CN 1861657 A (INSTITUTE OF PROCESS ENGINEERING, CHINESE ACADEMY OF SCIENCES) 15 November 2006 (2006-11-15)<br>entire document | 1-12 |

Form PCT/ISA/210 (second sheet) (July 2022)

**INTERNATIONAL SEARCH REPORT**
**Information on patent family members**

International application No.
**PCT/CN2023/138138**

| Patent document cited in search report | | | Publication date (day/month/year) | Patent family member(s) | | | Publication date (day/month/year) |
|---|---|---|---|---|---|---|---|
| WO | 2008135246 | A1 | 13 November 2008 | None | | | |
| CN | 101130171 | A | 27 February 2008 | CN | 101130171 | B | 08 September 2010 |
| CN | 113512152 | A | 19 October 2021 | CN | 113512152 | B | 10 May 2022 |
| | | | | WO | 2022257560 | A1 | 15 December 2022 |
| | | | | EP | 4275787 | A1 | 15 November 2023 |
| CN | 101861518 | A | 13 October 2010 | WO | 2009050801 | A1 | 23 April 2009 |
| | | | | US | 2010216906 | A1 | 26 August 2010 |
| | | | | US | 8217094 | B2 | 10 July 2012 |
| | | | | JP | 4840514 | B2 | 21 December 2011 |
| | | | | CN | 101861518 | B | 30 May 2012 |
| CN | 105572269 | A | 11 May 2016 | None | | | |
| CN | 110437424 | A | 12 November 2019 | CN | 110437424 | B | 06 May 2022 |
| CN | 112980037 | A | 18 June 2021 | CN | 112980037 | B | 20 September 2022 |
| CN | 1861657 | A | 15 November 2006 | CN | 100487011 | C | 13 May 2009 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2022116009496